Europäisches Patentamt

European Patent Office

Office européen des brevets

Publication number: **0 287 194**

**A2**

# EUROPEAN PATENT APPLICATION

Application number: 88301133.0

Int. Cl.4 **A23G 9/30 , A23G 7/00**

Date of filing: **11.02.88**

Priority: **13.02.87 US 14552**

Date of publication of application:
**19.10.88 Bulletin 88/42**

Designated Contracting States:
**AT BE CH DE ES FR GB GR IT LI LU NL SE**

Applicant: **BETA TECHNOLOGY INC.**
**105 Harvey West Boulevard**
**Santa Cruz California 95060(US)**

Inventor: **Livingston, James W.**
**27 South Circle Drive**
**Santa Cruz California 95060(US)**
Inventor: **Hosking, Stephen G.**
**45 Braemoor Drive**
**Santa Cruz California 95060(US)**
Inventor: **Moreland, Gary D.**
**2395 Delaware Avenue Space 90**
**Santa Cruz California 95060(US)**
Inventor: **Cassady, Henry W., Jr.**
**615 Cabrillo Avenue**
**Santa Cruz California 95060(US)**
Inventor: **Warner, Thomas J.**
**375 Clifford Avenue No. 310**
**Santa Cruz California 95076(US)**

Representative: **Froud, Clive et al**
**Elkington and Fife High Holborn House 52/54**
**High Holborn**
**London WC1V 6SH(GB)**

Clean in place system.

A system for cleaning a fluid product dispenser (18) which has means for supplying fluid product to a dispensing valve (22). The cleaning system includes a mixing tank (40) for containing rinse/treatment solutions, means (70) for delivering rinse/treatment solutions from the mixing tank to the dispenser's fluid product supply means, a draw valve actuator for opening and closing the dispensing draw valve where the draw valve actuator is responsive to valve open/close signals and means for controlling the cleaning system. The control means generates valve open/close signals to open and close the dispensing valve a multiplicity of times in accordance with a predefined sequence to release intermittently the rinse/treatment solutions from the fluid product supply means through the dispensing valve.

FIG.1.

1a

## CLEAN IN PLACE SYSTEM

The present invention relates generally to systems for cleaning food processing equipment, and particularly to a system and method for cleaning ice cream cone and shake makers in place - i.e.. without moving the cone and shake maker from the location where it is normally used.

BACKGROUND OF THE INVENTION

Ice cream cone and milk shake makers are standard equipment not only in ice cream parlors but also in convenience restaurants. There are a large number of different models made by a number of different manufacturers, including machines that make only cones, machines that make only milk shakes, and machines that make both. Nevertheless, most of these machines have basically similar plumbing-and therefore similar cleaning needs.

Cone and shake makers, like most food processing machines, need to be cleaned thoroughly every day to prevent the growth of bacteria. The problem addressed by this invention is how to efficiently clean cone and shake makers.

Until now, cone and shake makers have been cleaned manually. Proper manual cleaning requires extensive disassembly of the cone and shake maker so that each component which is exposed to food products can be thoroughly cleaned. In a typical cone and shake maker with four syrup flavors, there are dozens of components which need to be cleaned. Proper cleaning of such a machine will typically take 1.5 man hours each day.

Disassembly for cleaning creates at least two major problems: breakage caused by mishandling the equipment, and unsanitary conditions caused by failure to meticulously clean every component. In fact, a common problem is the failure of restaurant personnel to clean the cone and shake maker every day, because the cleaning procedure is so tedious and takes so long.

The present invention is a system and method for cleaning cone and shake makers in place. The primary purpose of the invention is to provide an effective, but easier way to clean these machines. The preferred embodiment of the present invention allows a typical cone and shake maker to be cleaned using less than one third of the manpower previously used. Once the clean in place system is attached to cone and shake maker, the cleaning cycle requires no human intervention - leaving the user free to perform other tasks. Typically, the cleaning cycle takes 20 to 30 minutes - thereby reducing not only the manpower used, but also reducing the total time occupied by the cleaning process by approximately half.

Since most cone and shake makers are cleaned at the end of the business day, providing a short cleaning cycle is important so as not to unnecessarily delay restaurant closings. Currently, the cleaning of the cone and shake maker is often the last task to be completed by the cleanup crew.

An important feature of the present invention is a system for mixing inflowing water with detergent and sanitizer (during different phases of the cleaning cycle) "on the fly". In most restaurants there is generally insufficient room to have a bath for mixing all the detergent water needed to perform a thorough cleaning. Also, the need to provide as short a cleaning cycle as possible - so as not do unnecessarily delay restaurant closings - makes it undesirable to use a significant amount of time mixing chemicals.

Another important feature of the present invention is the ability to detect problems, such as clogged pathways, which may compromise the effectiveness of the cleaning process. For instance, the preferred embodiment can detect the following problems: clogged and leaking syrup lines, insufficient supplies of detergent and sanitizer, low water temperature, insufficient water flow from the water supply, and a clogged drain line. Upon detecting any of these problems, the system can generate an audible alarm and display a message to explain the nature of the problem.

Along the same lines, the present invention includes a recording system for making a record of each cleaning cycle and the problems, if any, encountered during each cycle. These records permit management to check that the required cleanings have been performed and, by reviewing the reported problems, to assess the need for repairs or changes in the cleaning procedure.

The closest prior art systems known to the inventors are the clean in place systems used in dairy processing plants. In particular, both the dairy plant cleaning systems and the present invention perform their cleaning tasks by running water and water mixed with cleaning chemicals through the food processing channels.

However, cone and shake machines have a number of physical characteristics which make their cleaning requirements different than those of dairy processing plants. For instance, physical space restrictions are much less important in a diary processing plant than in a restaurant. Therefore dairy plant systems can use large baths for mixing detergents and sanitizing chemicals with water, whereas this is not practical in a restaurant. Also, the clean in place systems for dairy plants are built into, or integrated with, the processing equipment. While the present invention can also be integrated into a cone and shake maker, there are tens of thousands of cone and shake makers being used which were not designed to include a clean in place system within the machine's housing. Therefore it has been one of the primary goals of the inventors to provide a practical clean in place system which can be housed in a moveable cart of reas·'nable size, e.g., no more than 3´ by 2´ by 3´ tall. The inventors anticipate that most models of the invention, or at least most of those made during the next few years, will be housed in separate moveable carts which are connected to the cone and shake maker only for cleaning.

Another difference between dairy plants and cone and shake machines is that cone and shake machines typically have several draw valves which are fed from the same freezer-requiring a series of steps for cleaning the draw valves one at a time. As a result of these factors the inventors determined that they needed to provide apparatus for automatically opening and closing draw valves in accordance with a specified sequence. Also, the cone and shake freezers and the draw valves were designed to be cleaned while disassembled - they were not designed to facilitate cleaning by a clean in place system. To solve this problem the invention provides apparatus for providing the agitation necessary for effective cleaning - by activating, under program control, the mixing apparatus in the freezers and also for activating the spinners in the draw valves.


## SUMMARY OF THE INVENTION

In summary, the present invention is a system for cleaning a fluid product dispenser which has means for supplying fluid product to a dispensing valve. The cleaning system includes a mixing tank for containing rinse/treatment solutions, means for delivering rinse/treatment solutions from the mixing tank to the dispenser's fluid product supply means, a draw valve actuator for opening and closing the dispensing draw valve where the draw valve actuator is responsive to valve open/close signals, and means for controlling the cleaning system. The control means generates valve open/close signals to open and close the dispensing valve a multiplicity of times in accordance with a predefined sequence to release intermittently the rinse/treatment solutions from the fluid product supply means through the dispensing valve.

According to another aspect of the invention, a method of cleaning a fluid product dispenser which has means for supplying fluid product to a dispensing valve comprises:

i) removing fluid product from the dispenser's fluid product supply means;

ii) providing in a tank required rinse/treatment solutions;

iii) delivering the rinse/treatment solutions from the tank to the fluid product supply means;

iv) pressurizing the solutions in the fluid product supply means;

v) opening and closing the dispensing valve periodically to pass the solutions through the fluid product supply means and the dispensing valve; the method being characterized in providing means for actuating the dispensing valve to open and close the valve, and providing a preprogrammed controller with a program to generate signals for actuating the actuation means to open and close the dispensing valve in accordance with a schedule predetermined by said program.


## BRIEF DESCRIPTION OF THE DRAWINGS

Additional objects and features of the invention will be more readily apparent from the following detailed description and appended claims when taken in conjunction with the drawings, in which:

Figures 1, 1A and 1B are perspective views of a cone/shake maker and a clean in place system, the liquid inlets of a cone/shake maker, and the interconnection of the clean in place system to a cone/shake maker.

Figure 1C is a block diagram of a cone/shake maker and the preferred embodiment of a clean in place system for the cone/shake maker. Figure 1D shows how the syrup line pumps are controlled, and how the state of each pump is detected.

Figure 2 is a second block diagram showing some additional components of the preferred embodiment.

Figure 3 depicts the display and control panel of the preferred embodiment.

Figure 4 schematically depicts a set of draw valve actuators. Figures 4A-4N further depict the draw valve actuators and other mechanical aspects of the preferred embodiment.

Figure 5 schematically depicts the control circuitry of the preferred embodiment.

Figures 6 and 6A show two conductivity measuring circuits.

Figure 7 is a flow chart of the control program for the controller in the preferred embodiment.

Figure 8 depicts the setup and step data structures used to control the sequence of tasks performed by the clean in place system.

Figure 9 depicts the input data structures for receiving logical inputs from the cone/shake maker and the clean in place system.

Figure 10 depicts the FLAGREG data structure for denoting the current status of the clean in place system.

Figure 11 depicts the data output data structures.

Figure 12 depicts the data structures used to keep track of error conditions, and also the data structures used to store records of completed and aborted cleaning cycles.

Figure 13 depicts the LEVERREG data structure for denoting which syrup line pump corresponds to each shake draw valve actuator used in the preferred embodiment.


## DESCRIPTION OF THE PREFERRED EMBODIMENT

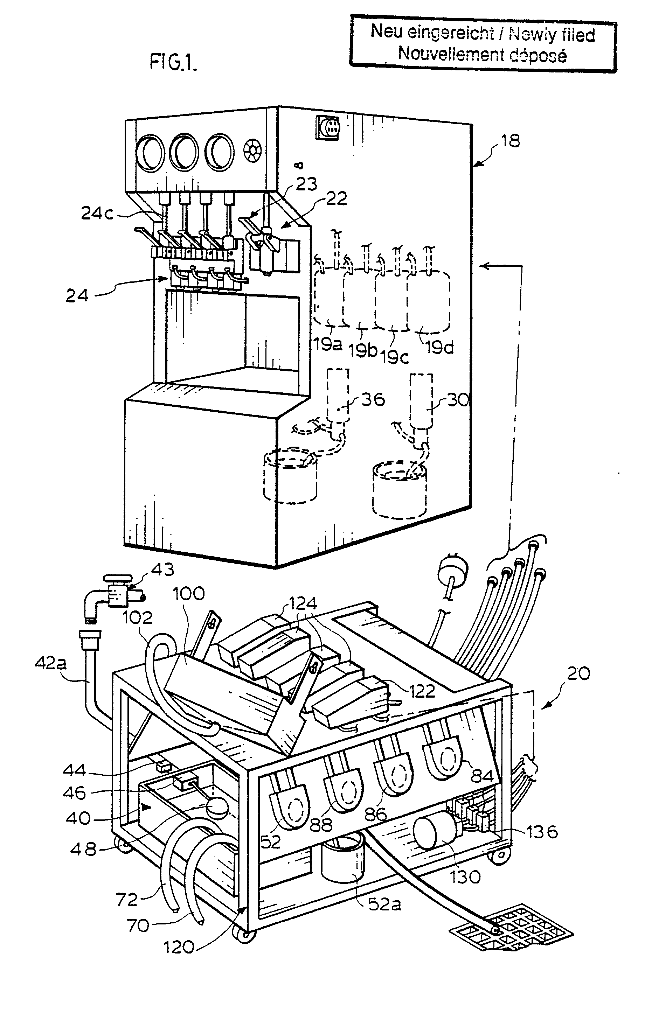

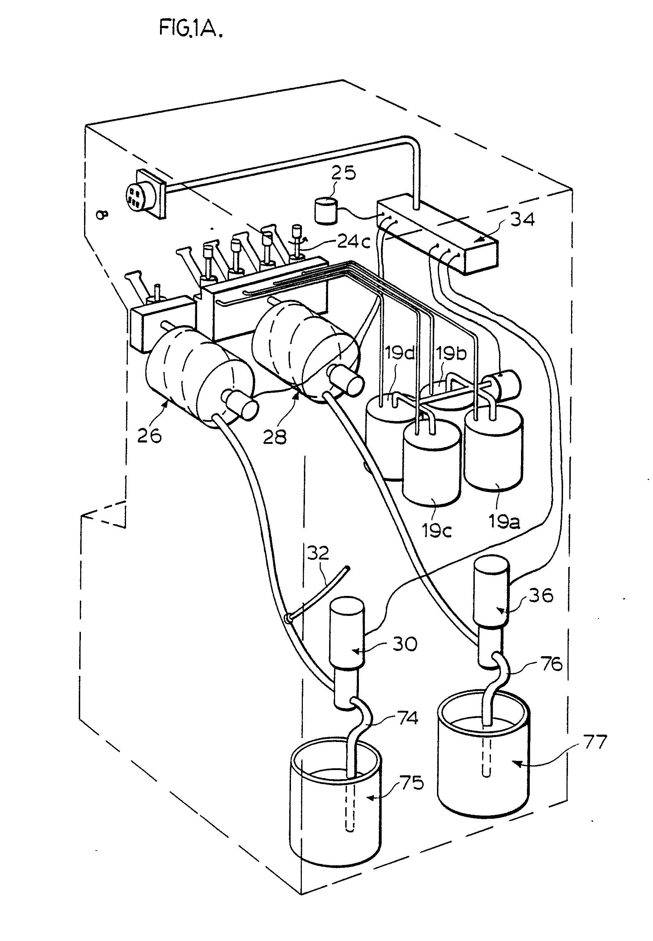

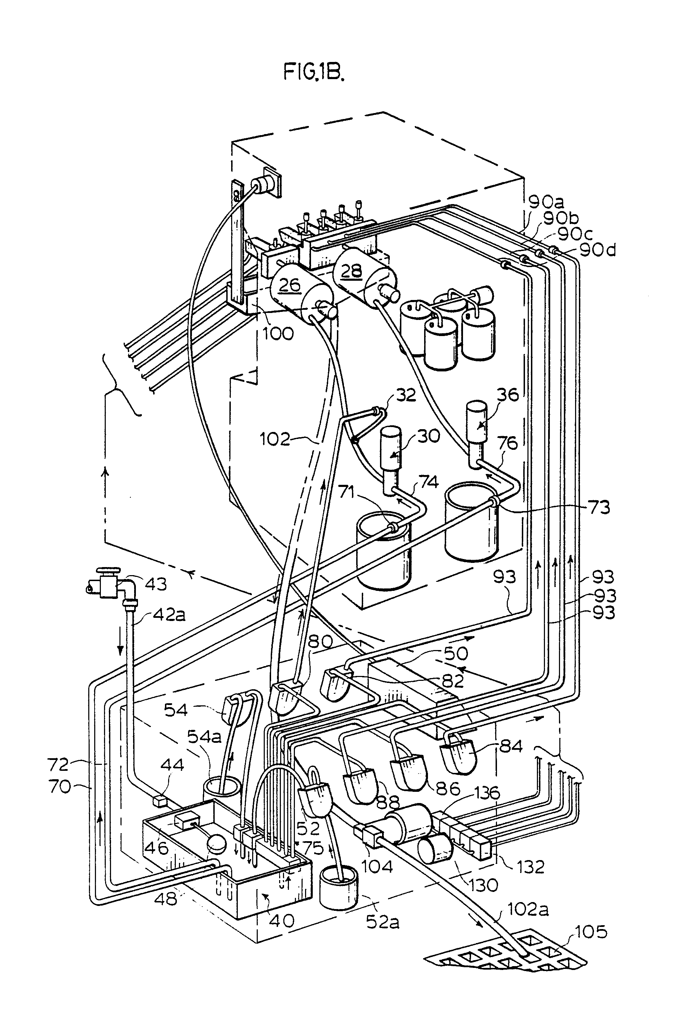

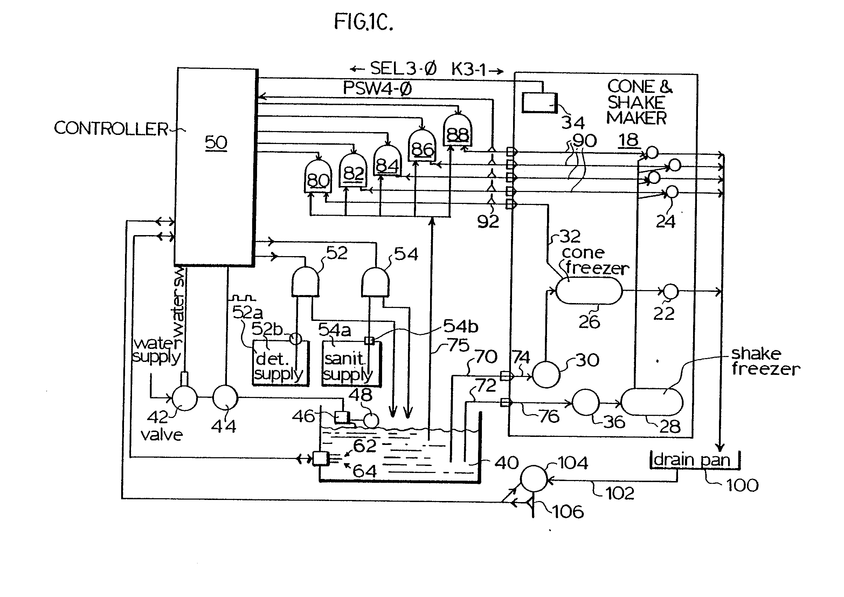

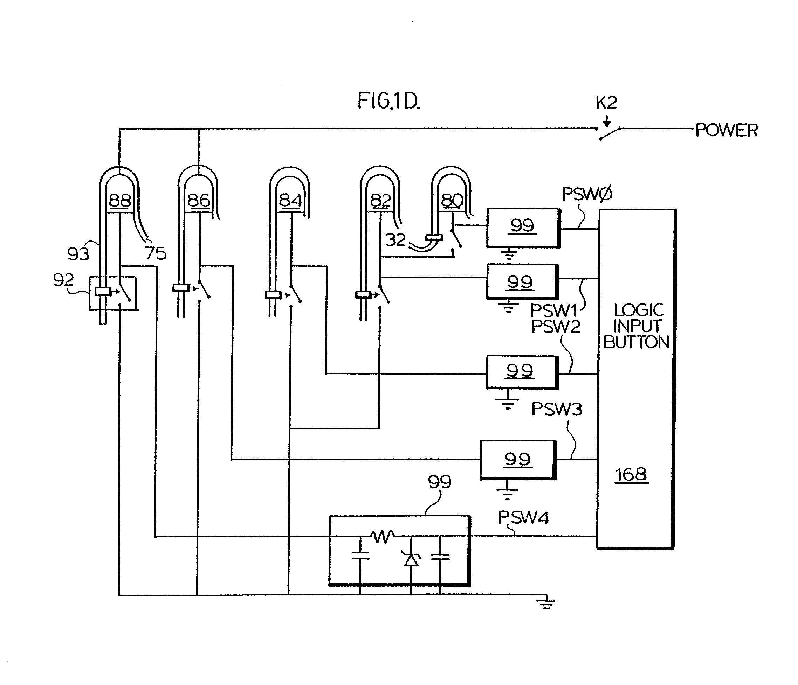

Referring to Figures 1, 1A, 1B, 1C and 1D, there is shown a cone/shake maker 18 and the preferred embodiment of a clean in place system 20 for the cone/shake maker. Although the system 20 is discussed with respect to cleaning the device 18, it is appreciated that the system 20 is useful in cleaning any type of fluid product dispensing system.

For convenience, the abbreviation CSD will be used for cone/shake dispenser or maker, and the abbreviation CIPS will be used for clean in place system.


Overview of Relevant Cone/Shake Dispenser Features

The CIPS 20 can be used to clean several different CSD models. A typical CSD, such as the one shown in Figure 1, has both a ice cream cone dispenser 22 and several shake dispensers 24 for making milk shakes with different syrup flavors as provided in containers 19a, 19b, 19c and 19d. Different CSD models can have different configurations of cone and shake dispensers 22 and 24. The preferred embodiment of the CIPS 20 can clean any CSD having zero to one cone dispensers 22 and zero to four shake dispensers 24. In other words, the CSD configurations may vary from small machines with just a cone maker, or just a shake maker with one or two syrup flavors, to larger machines with both a cone maker and a shake maker with up to four syrup flavors.

In a typical, large CSD 18 there is a cone freezer barrel (hereinafter called the cone freezer) 26 and a shake freezer barrel (hereinafter called the shake freezer) 28. The CSD has a product pump 30 for adding cone product to the cone freezer 26 when the pressure on a cone pressure line 32 is below a predefined threshold. The cone pressure line 32 is typically a tube that couples the cone freezer 26 to a pressure switch in the CSD's control circuitry 34. During normal use (as opposed to when the CIPS is connected to the CSD for cleaning) the cone product pump's inlet 74 is coupled to a supply 75 of cone product.

In most CSDs there is only one draw valve 22 (also called a cone dispenser) for each cone freezer 26, although some models have three or more. The draw valve 22 is typically operated by a hand lever 23 that opens a passage way through the draw valve when the lever is pushed down, and closes the valve when the lever is pushed up.

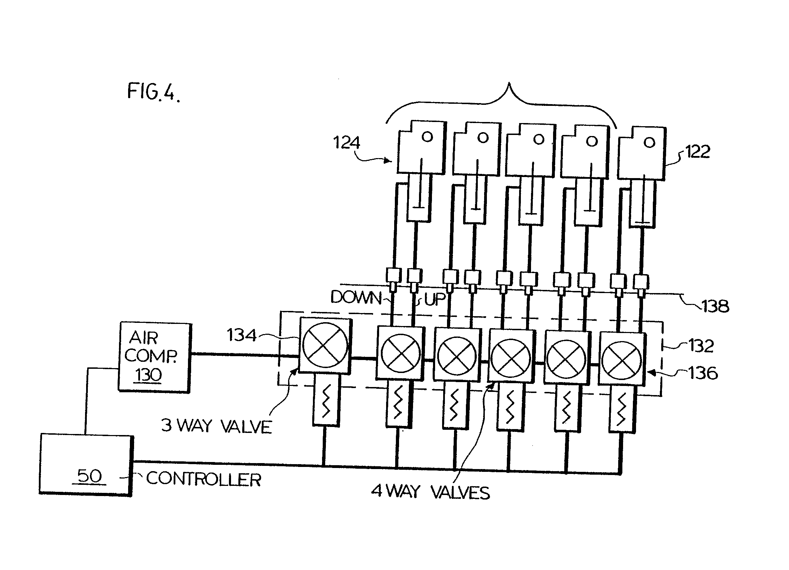

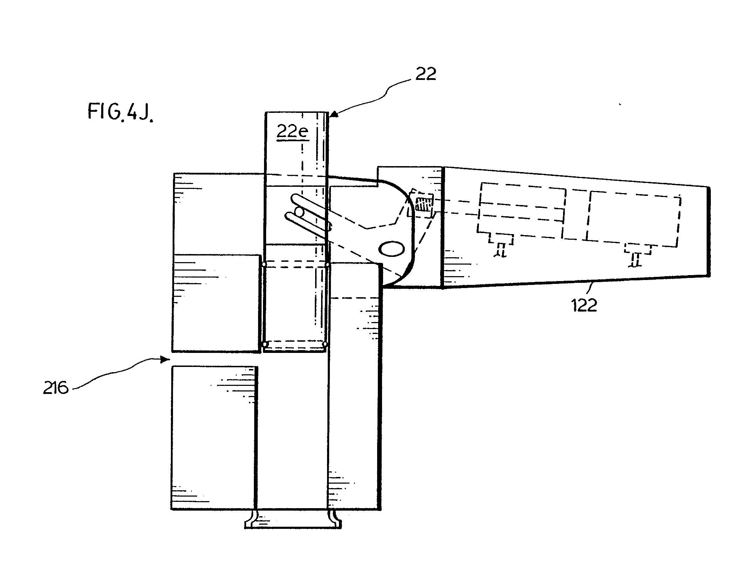

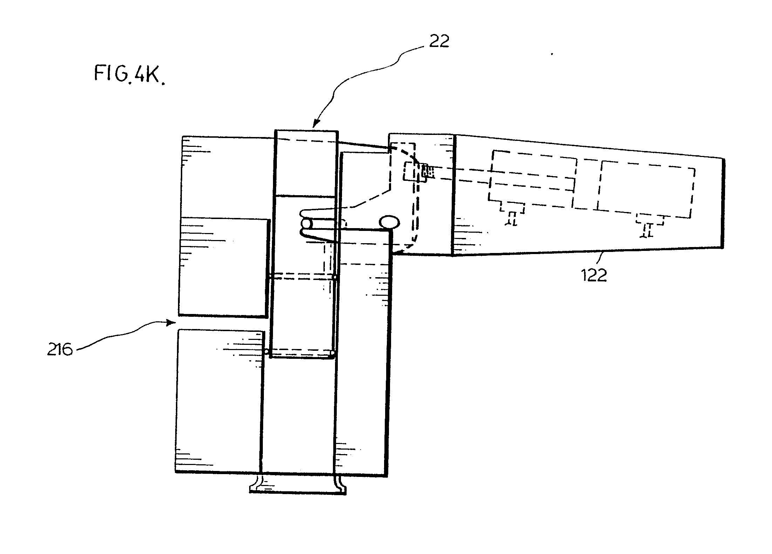

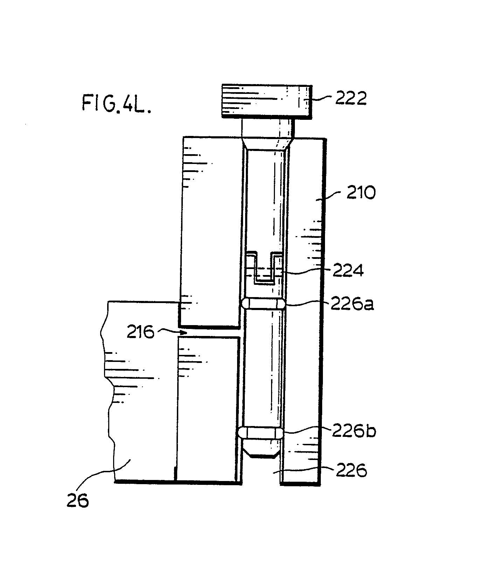

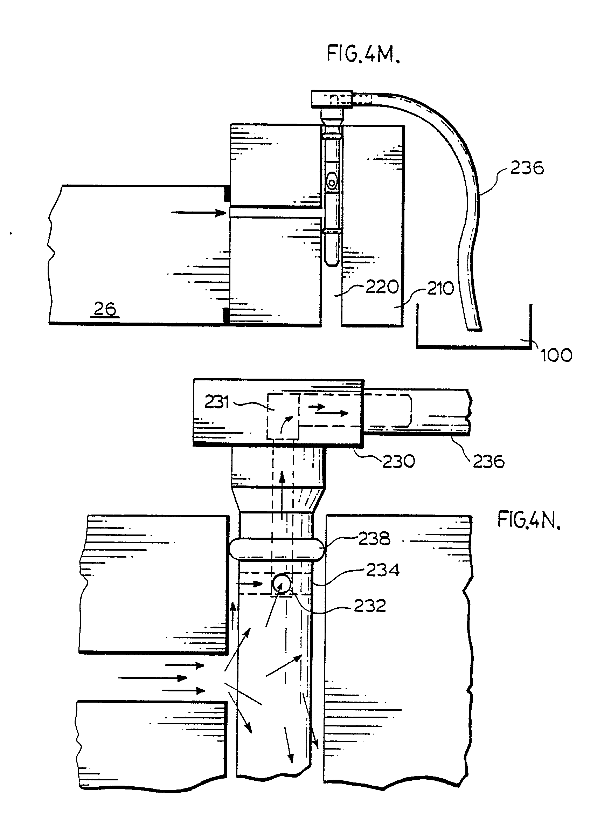

The shake freezer 28 also has a product pump 36 that adds shake product 77 to the shake freezer 28. During normal operation (i.e., except when the CSD is being cleaned), the shake product pump 36 is activated when any of the shake draw valves are opened. As will be discussed in more detail below with reference to Figure 4D each shake draw valve is coupled to a mechanical switch which, during normal operation, activates the shake product pump 36 when the draw valve is opened.

The draw valves 24 for dispensing shakes include a motor 25 for driving spinner 24c for mixing the milk shake with flavored syrup. During normal operation these spinners are individually turned on by the mechanical switch 24d in the corresponding draw valve. As will be described below, during cleaning these spinners can be turned on and off by the CIPS. In general, turning on the spinners increases agitation in the draw valves and therefore promotes cleaning.

4

In the preferred embodiment, the controller 34 for a standard CSD has been modified so that three control signals K1 - K3 can be used as on/off control signals for the spinners (K1), the shake freezer's pump and mixer (K2), and the cone freezer's pump and mixer (K3), respectively. A set of four jumpers has also be added to the controller 34 to generate a four-bit binary signal SEL3-0 that identifies the model or configuration of the CSD (i.e., the number and types of draw valves in the CSD).

Overview of Clean In Place System Components

The CIPS 20 has a mixing tank 40 for providing both rinse water and water mixed with either detergent or sanitizer for use in cleaning the CSD 18. The mixing tank 40 has a usable capacity of two gallons even though twenty to thirty gallons of water are used in a typical cleaning cycle. The reason the mixing tank 40 is so small is to make the CIPS 20 small enough to fit on a small four wheeled cart 120. Preferably, the mixing tank will have a capacity of less than one fourth of the total water used, and will preferably have a capacity of less than one tenth of the total water used.

As will be described in detail below, the present invention provides a system for mixing water with cleansing chemicals (i.e., detergent and sanitizer) as water is added to the mixing tank 40 so that the concentration of cleansing chemical in the mixing tank remains within a specified range.

Water is added to the mixing tank 40 as follows. Water flows from a water supply (such as a water tap 43) to the tank 40 through a sequence of elements: a solenoid valve 42, a flow meter 44, and then a float valve 46 which closes off when the valve's float 48 rises to a level that indicates that the tank 40 is full.

The CIPS's controller 50 generates a binary control signal WaterSw which opens and closes the solenoid valve 42. As water flows into the tank 40, the flow meter 44 generates one pulse for each predefined volume or unit of water which flows through the meter 44. The controller counts the flow pulses and thereby calculates the amount of water which has been added to the tank 40. In the preferred embodiment, the flow meter consists of a paddle wheel in a cavity through which the water passes. As the paddle wheel turns, it breaks a light beam from a lamp to a detector, producing 1160 pulses per liter.

Two pumps 52 and 54 pump detergent and sanitizer from corresponding supply bottles 52a and 54a into the mixing tank 40. To reduce the risk of users providing these pumps with the wrong chemicals, incompatible connectors 52b and 54b are used to connect the detergent and sanitizer pumps to their supply bottles. In an alternate embodiment, different size bottle "seats" are provided below the detergent and sanitizer pumps, corresponding to detergent and sanitizer bottles of different sizes, to discourage inadvertent connection of the pumps 52-54 to the wrong chemical supply.

As will be described in more detail below, during detergent and sanitizer cycles, a specific amount of the corresponding chemical is added to the mixing tank 40 for each unit of water which flows through the meter 44 into the tank 40. Thus the cleansing chemical solution is mixed "on the fly" as the cleansing solution is being used.

The conductivity of the fluid in the mixing tank is monitored by the controller 50 to ensure that (1) the correct chemical supply is connected to each pump 52-54, (2) that the chemical supply has not been exhausted, and (3) that the quantity of chemical added falls within a specified concentration range. For this purpose the controller 50 is coupled to a probe connector 60, near the bottom of the tank 40, which includes a temperature probe 62 and a conductivity probe 64.

The basic operation of the conductivity probe 64 is as follows. The controller 50 periodically samples the conductivity of the medium between the conductivity probe's two elements. The resulting measurement is compared with a specified conductivity range to determine if the fluid in the tank 40 is within the specified concentration range. In the preferred embodiment, an allowed conductivity range is specified for every "step" of the cleaning process. If the measured conductivity remains outside the specified range for at least a threshold period of time, an error message is generated. A more detailed description of how these probes are used is provided below in the sections describing the corresponding portions of the control software.

The contents of the mixing tank 40 are pumped into various portions of the CSD 18 by several different pumps. The product pumps 30 and 36 inside the CSD 18 are connected to the mixing tank 40 by tubes 70 and 72, which have end connectors 71 and 73 that mate with the product inlet lines 74 and 76. Five pumps 80-88 inside the CIPS 20 pump fluid from the mixing tank 40 into the syrup lines 90 and the cone pressure line 32.

Tubes 70 and 72 extend close to the bottom of the mixing tank 40 so that water will be drawn into the mix pumps 30 and 36 unless the mix tank is empty. Tube 75 which feeds pumps 80-88, on the other hand, extends only about halfway from the high water level to the bottom of the tank 40 so that air can be drawn through the syrup lines 90 to clear these lines at various points in the cleaning cycle, such as at the end of the initial rinse cycle.

The cone pressure line 32 has a different connector than the syrup lines, thereby ensuring that the proper pump (pump 80) is connected to the cone pressure line 32. In most cases, the product lines 74 and 76 do not have end connectors - instead these lines are typically fairly large (5/8 inch inner diameter) p.u.c. tubes, and therefore the CIPS tubes 70 and 72 terminate with stainless steel ferrules which fit inside the ends of the product line tubes 74 and 76.

All of the pumps 80-88, 30 and 36 are turned on and off under the control of the controller 50. Also, there is a pressure switch 92 on the outlet of each pump 80-88 which is normally closed, but which opens when the pressure on the outlet exceeds fifteen pounds per square inch (psi). In other words, each switch generates a high/low signal indicating whether the pressure on the pump's outlet exceeds, or does not exceed fifteen psi.

Referring to Figure 1D, during cycles when the use of these pumps is enabled, each of the syrup pumps 82-88 is turned on when its pressure switch 92 detects a low pressure condition (less than fifteen psi) on its outlet line 93 and is turned off when its pressure switch generates a high pressure signal. The pressure switch 92 turns the pump on and off by closing and opening the pump motor's connection to ground, which completes and breaks the motor's electrical connection.

To protect the cone pressure line 32 from being damaged by excessive pumping, the cone pressure line pump 80 is turned on only when the fourth syrup line pump 82 is turned on and the cone pressure line's switch 92e detects a low pressure condition. Since the cone pressure line 32 feeds into the cone freezer barrel 26 (which is connected to a purge valve that limits the pressure in the barrel to around five psi), the cone pressure switch 92e should never detect a high pressure condition, unless the cone pressure line 32 becomes blocked or kinked.

Logic signals PSW4-0, indicating whether each pump 80-88 is on or off, are generated by running the electrical signal from the low voltage connection of each pump through a filter network 99. The output of each filter network 99 will be 0 volts if the corresponding pump is off, and about 4.7 volts if the pump is on.

The controller 50 periodically (eight times per second) reads the logical (binary) signals PSW4-0, through interface 168 to check for leaking and clogged syrup lines, as will be explained in more detail below.

A drain pan 100 is attached to the front of the CSD during cleaning cycles to catch the fluids exiting the draw valves 22 and 24. The contents of the drain pan 100 are pumped through drain line 102 by a pump 104 into a drain 105. The drain pump 104 is typically turned on by the controller 50 for the duration of the cleaning cycle. The drain pump 104 is provided because the force of gravity may be insufficient to move the fluid in the pan 100 to a drain which is fairly far away, and to ensure that the fluid in the pan 100 is disposed of quickly enough to prevent the pan 100 from overflowing.

Also, if the pressure switch 106 on the drain pump's outlet indicates that the drain line is blocked for any reason, the cleaning process is halted to prevent the drain pan 100 from overflowing. An error message is also displayed when this happens.

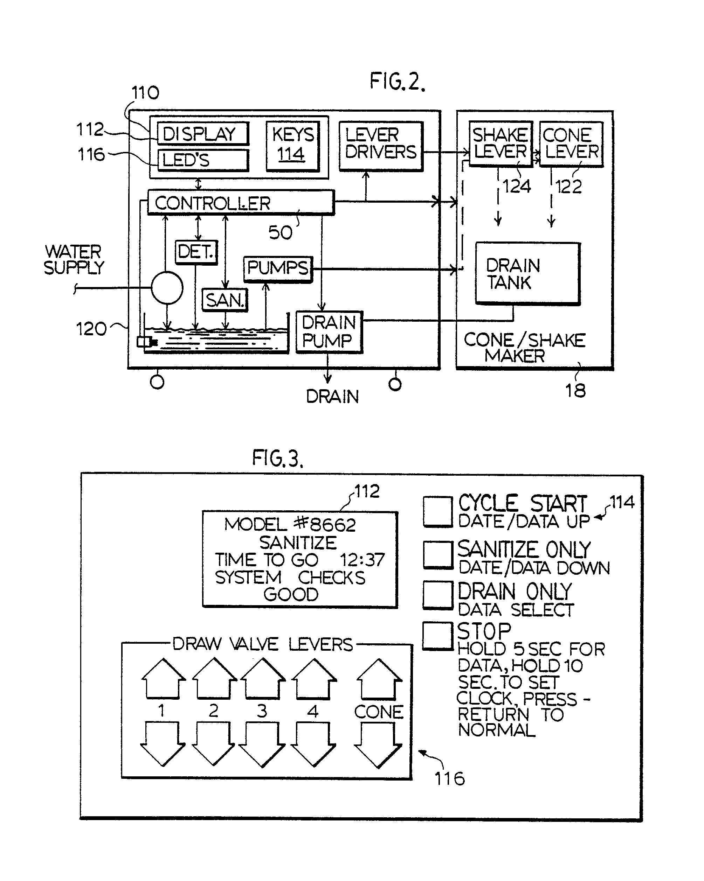

Figure 2 shows some additional components of the preferred embodiment, including a control panel 110 coupled to the controller 50. The control panel 110 has a four line LCD display 112 for displaying messages and recorded data, and a set of labelled keys 114 for starting cleaning processes, setting an internal clock, and reviewing stored data. The preferred embodiment also has a set of LEDs 116 for showing the current position of the CSD's draw valves 22 and 24, for reasons explained below.

The layout of the control panel in the preferred embodiment is shown in Figure 3.

Another feature shown in Figure 2 is the moveable cart 120 in which the preferred embodiment is housed. This cart 120 has four wheels and is approximately thirty inches long, 18.2 inches wide, thirty inches high, and weighs approximately 150 pounds when loaded with all of the CIPS equipment (but not including the water in the mixing tank).

An important feature of the CIPS is the provision of draw valve levers (hereinafter called actuators or draw valve actuators) 122 and 124 for opening and closing the CSD's draw valves 22-24 in a specified sequence. One actuator is mounted on each draw valve 22-24, and the controller 50 determines when each actuator forces its draw valve UP (closing the draw valve) and DOWN (opening the draw valve).

## CIPS - CSD Interconnections and Related Components

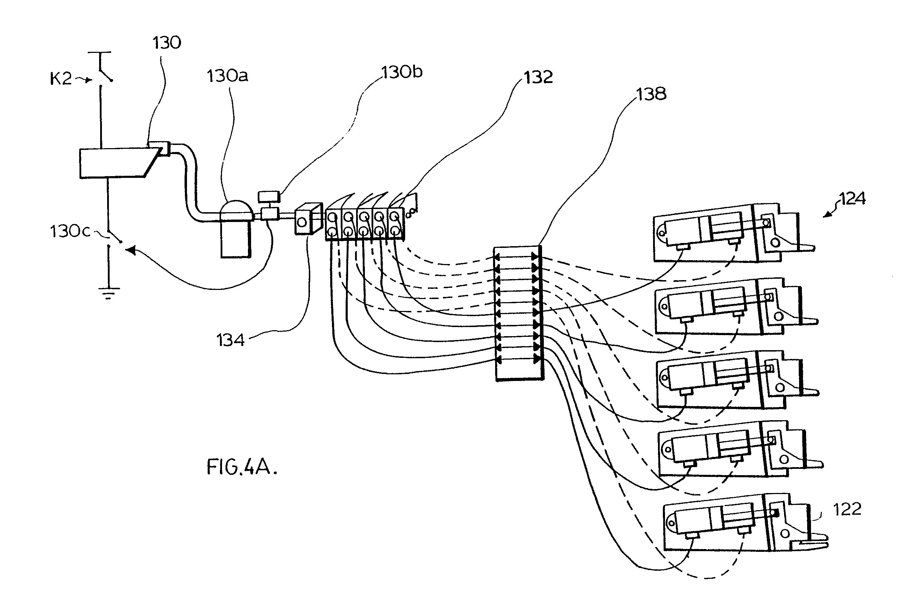

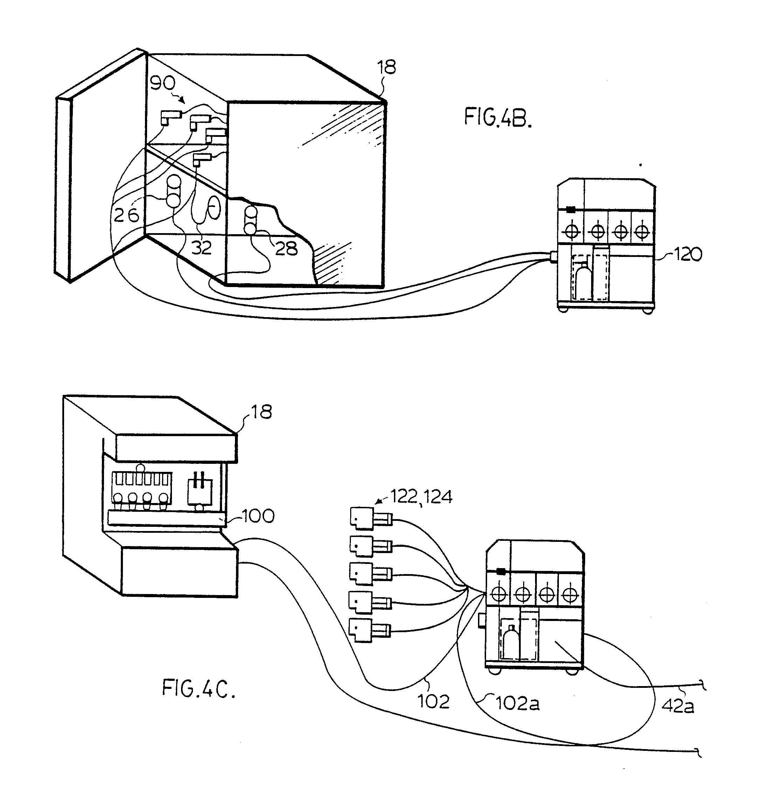

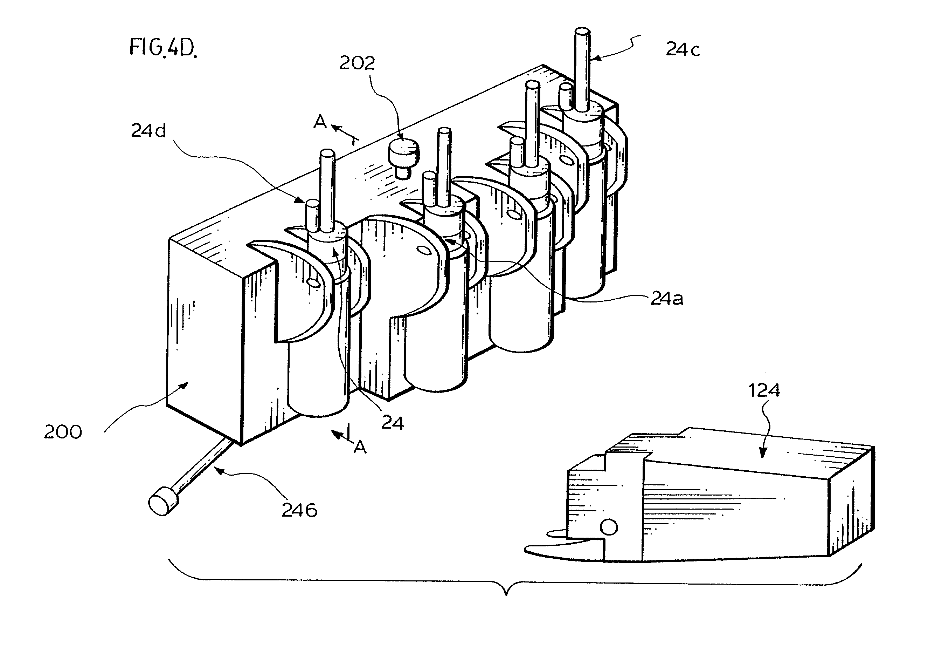

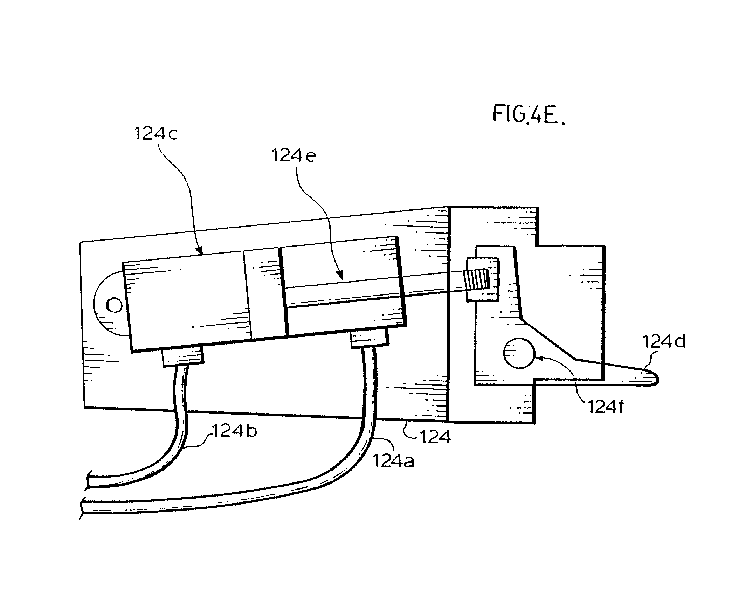

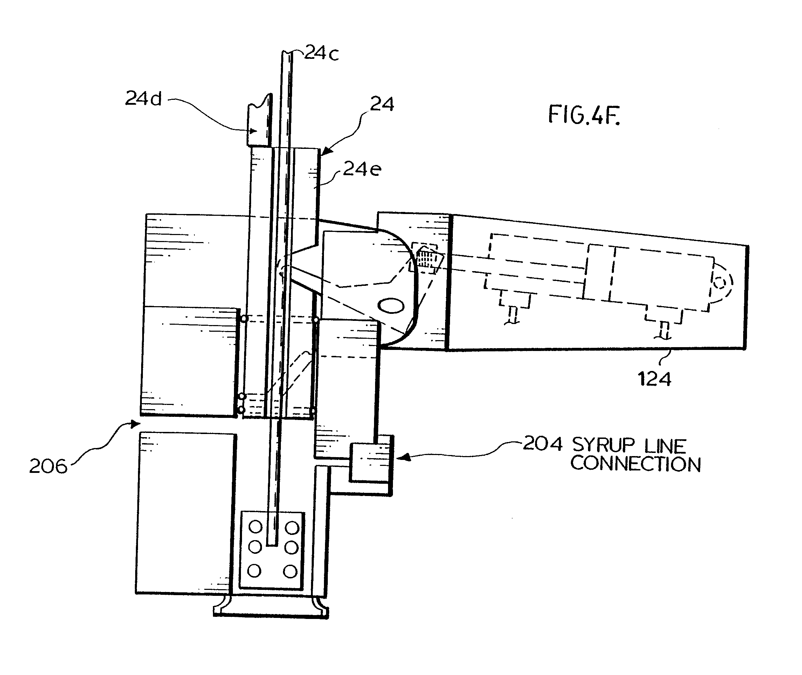

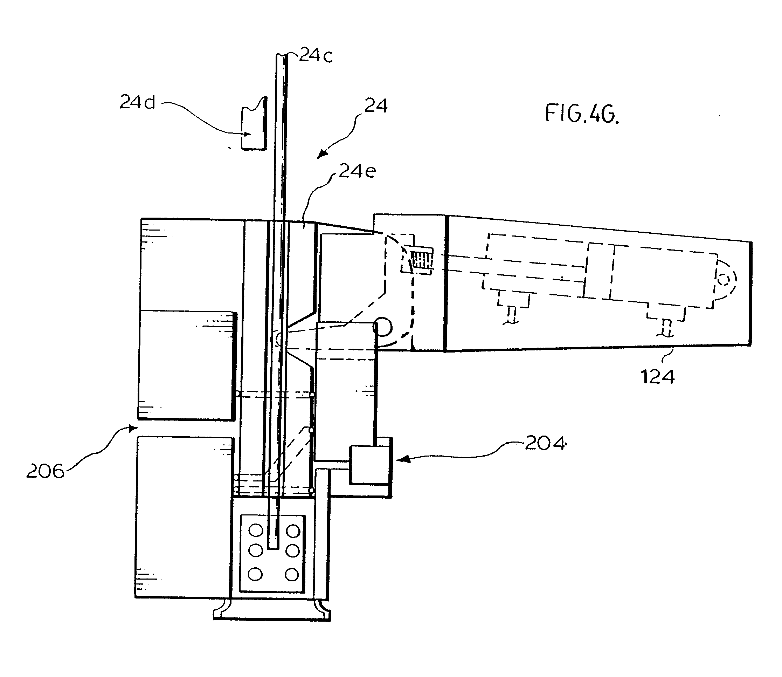

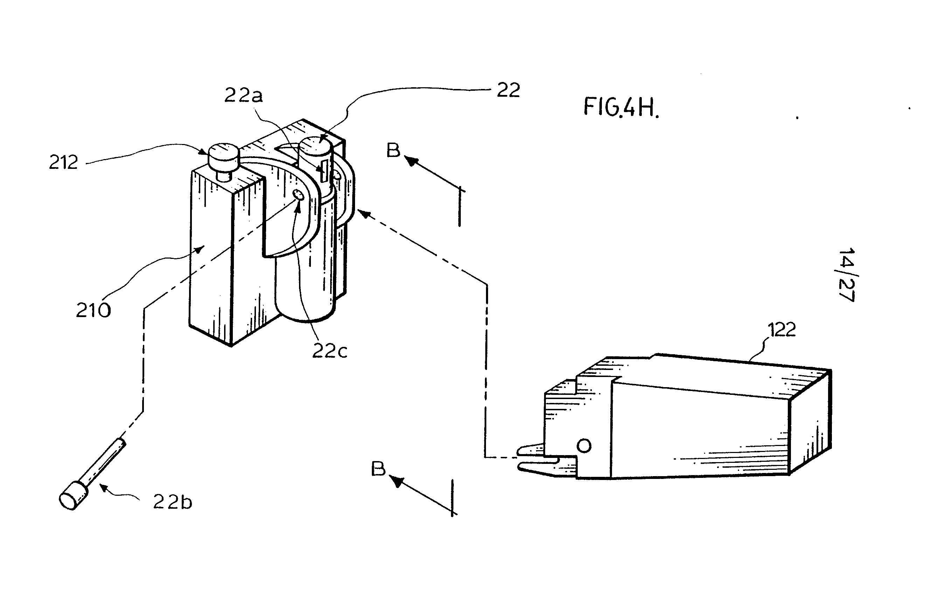

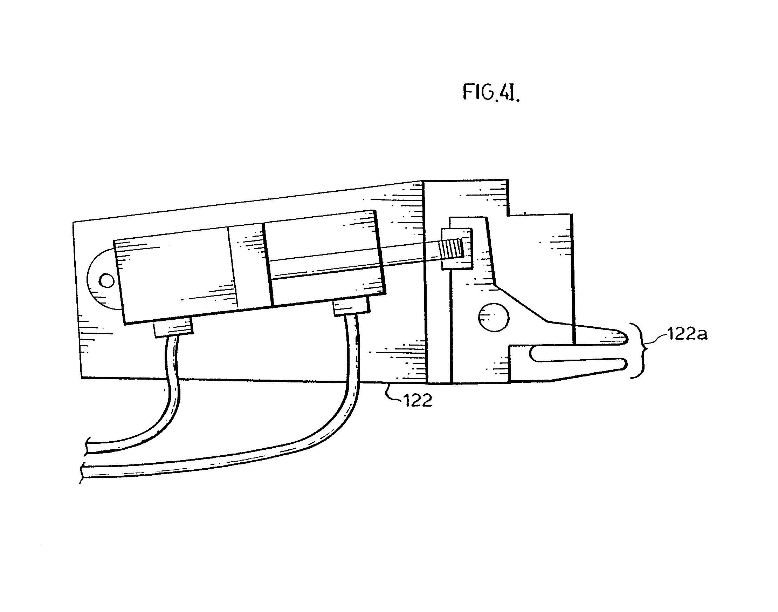

As shown in Figure 4, compressed air from an air compressor 130 is directed by a solenoid valve manifold 132 to the draw valve actuators 122 and 124. The manifold includes a master valve 134 and five 4-way valves 136 each coupled to one actuator. Both the master valve 134 and the compressor 130 are enabled when the controller 50 generates a positive K2 control signal (which also turns on the shake pump and mixer in the CSD). When the K2 control signal is low, the compressor 130 is turned off, and the master valve 134 vents the pressure in the system so that the actuators go limp.

If the master valve 134 is enabled, each of the valves 136 directs the compressed air into either the UP or DOWN outlet so that the corresponding actuator forces its draw valve up or down. In one preferred embodiment, the actuators 122-124 are connected to the manifold 132, which is inside the roll around cart 120 (see Figure 2) by a quick disconnect panel 138 so that the actuators can be mounted on the draw valves before the actuators are coupled to the cart 120. In another preferred embodiment the actuators 122-124 are permanently coupled to the manifold 132 in the cart 120.

Referring to Figure 4A, the air compressor 130 is followed by an air filter 130a and a pressure switch 130b. The pressure switch 130b regulates the pressure in the air module to about 15 psi by opening switch 130c (which breaks the compressor's ground connection) when the pressure in air module is above its set point, and closing the switch 130c when the pressure falls below the set point. The compressor 130 is coupled to its power supply by a switch that is closed by control signal K2, which also turns on the shake mix apparatus in the CSD.

Figure 4B depicts in a general format of what is shown in Figures 1, 1A and 1B, the fluid line connections from the CIPS cart 120 through the rear door of the CSD to the shake lines 90, the cone pressure line 32, the cone freezer barrel 26, and the shake freezer barrel 28.

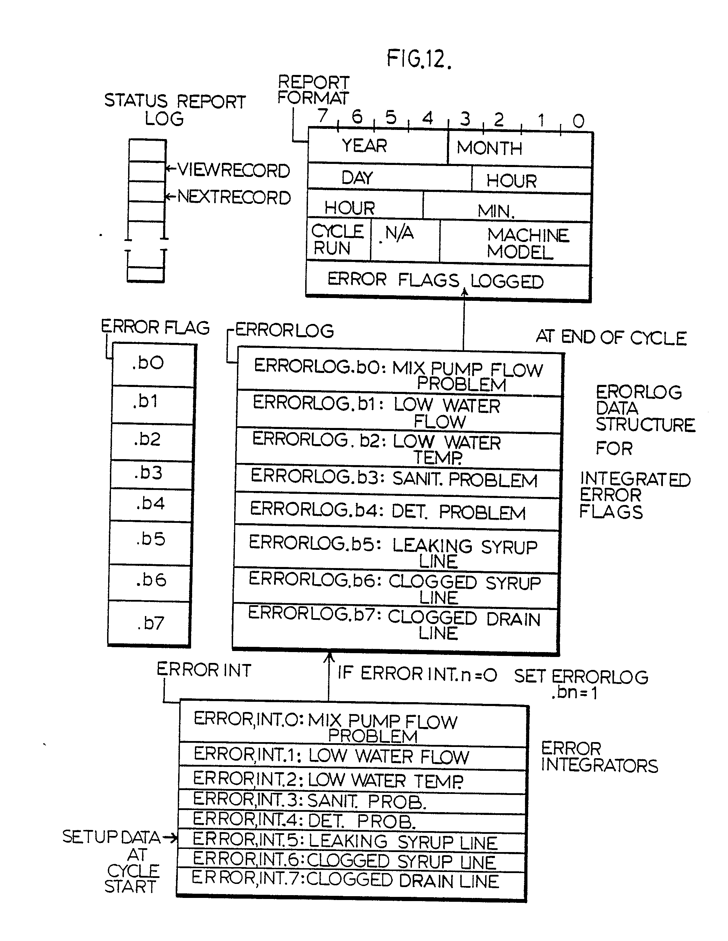

Figure 14C depicts in a general format of what is shown in Figures 1, 1A and 1B, the drain line 102 connection between the drain pan 100 on the front of the CSD to the drain pump in the CIPS cart 120, which pumps the contents of the drain pan through line 102a to a drain. Line 42a is the connection to the water supply used by the CIPS 20.

Figure 4D depicts the door assembly for the milk shake dispensing portion of a CSD. The shake door 200 shown has four shake draw valves 24. Each draw valve has a mounting slot 24a in which a lever can be inserted, and mounting holes through which a mounting pin 24b can be inserted to provide a pivot for the lever. When the CIPS is being used, the normal manual lever for each draw valve 24 is replaced with an automatic actuator 124.

As shown in Figure 4D, each shake draw valve 24 has a spinner 24c normally used for mixing syrup in milk shakes. Each draw valve 24 also has a microswitch 24d which is pressed when the draw valve is opened to dispense a shake. During normal operation, pressing any one of these switches will activate the shake pump and mixer. Thus during normal operation, the shake pump is on only when one of the shake draw valves is open, which prevents excess pressure from building up in the shake barrel-pressure which would otherwise damage gaskets, seals and other elements of the shake dispensing apparatus. During cleaning cycles, the CIPS system controls the operation of the shake pump and mixer with the K2 signal, overriding the normal operation of these switches 24d.

The CIPS also controls the operation of the spinners 24c in the shake draw valves, with the K1 control signal. During most of the cleaning cycle, except when the barrels are being drained at the end of each major subcycle, the spinners are activated to increase back pressure and agitation.

Figure 4D also shows that the shake door 200 has a purge valve 202. There is also a purge valve in the cone door, shown in Figure 4H.

Each purge valve is connected to the corresponding freezer barrel, and is used during normal operation to remove excess air from the shake/cone freezer barrel when the CSD is recharged with shake and cone product at the beginning of the day. To be more specific, when the purge plug is pulled upwards, a passage way is opened which allows the air and liquid in the barrel to pour out through an opening in the bottom of the door 200. As will be explained below with respect to Figures 4L-N, an important aspect of the present invention is a vented purge plug which prevents excess back pressure from building up in the shake dispensing apparatus.

## Automatic Actuators.

Figure 4E depicts a shake draw valve actuator 124. Two pneumatic air lines 124a and 124b connect to the pneumatic cylinder, and the air pressure in these lines pivots the actuator link 124d (and thus the draw valve 24) up and down, respectively, by pushing cylinder rod 124e back and forth, which causes the link 124d to pivot around the mounting pin 24d which is inserted through mounting hole 124f.

Figure 4F is a sectional view, corresponding to section line AA in Figure 4D, of a shake draw valve 24 being opened by an automatic actuator 124. As shown, when the draw valve is in the open position, the draw plunger 24e is pushed up, opening the passage ways from the syrup line port 204 and the shake inlet port 206. Figure 4G is a similar sectional view showing the shake draw valve 24 being closed by the automatic actuator 124.

Figure 4H depicts the door assembly for the ice cream cone dispensing portion of a CSD. The cone door 210 shown has one draw valve 22, which has a mounting slot 22c in which a lever can be inserted, and mounting holes through with a mounting pin 22b can be inserted to provide a pivot for the lever. When the CIPS is being used, the normal manual lever for the draw valve 22 is replaced with an automatic actuator 122. Like the shake door 200, the cone door 210 has a purge valve 212 for expelling air and water when the cone dispenser is first filled with cone product during normal use.

Figure 4I depicts a cone draw valve actuator 122, which is virtually the same as the shake draw valve actuator 124 shown in Figure 4E, except for the shape of the actuator link 122d, which is designed to fit the mounting slot 22a of a cone draw valve 22.

Figure 4J is a sectional view, corresponding to section line BB in Figure 4H, of a cone draw valve 22 being opened by an automatic actuator 124. As shown, when the draw valve is in the open position, the draw plunger 22e is pushed up, opening the passage ways from the cone inlet port 216. Figure 4K is a similar sectional view showing the cone draw valve 24 being closed by the automatic actuator 122.

## Purge Valve.

Referring to Figure 4L, the purge valve in the cone and shake doors is a shaft 220 with an inlet port 216 in fluid connection with the ice cream or shake barrel. Although not shown in these Figures, in the prior art, the purge valve is plugged by a straight plug which can be lifted high enough to open the inlet 216, but cannot be lifted high enough to remove the plug entirely from the shaft 220 because the door 210 is installed in such a way that the plug's vertical movement is limited by a panel above the door 210, unless the entire door 210 is removed from its mounting.

During normal operation, the seals of the cone barrel 26 and the shake freezer barrel 28 are protected from overpressure. The cone pump 30 is turned on when a pressure switch at the end of the cone pressure line 32 detects a low pressure condition, and the shake pump 36 is turned on by activation of any of the microswitches 24d when a shake draw valve 24 is opened.

During cleaning, however, the cone and shake pumps 30 and 36 are turned on and off by signals K2 and K3 from the CIPS. To prevent the build up of pressure in the cone and shake freezers which would harm the CSD, the inventors have developed two new purge valves. The purge valve 222 shown in Figure 4L is a plug intended for use during normal dispensing operations. This valve 222 has a hinge 224 that enables its removal, and two o-ring seals 226a and 226b for preventing fluid transit either up or down the purge shaft 220.

When the CSD 18 is set up for cleaning, the purge valve 222 shown in Figure 4L is removed and replaced with the purge valve 230 shown in Figures 4M and 4N. This purge valve 230 does not plug the purge shaft 220. Instead, it is purposely made to not completely fill the shaft 220, thereby allowing liquid from the barrel 26 to escape downward through to bottom end of the shaft 220. The purge valve also has an internal passage way 231, starting with a port hole 232 near the valve's hinge 234 which allows fluid from the barrel 26 to flow through the passage way 231 and out through a discharge tube 236 into the drain pan 100 on the front of the CSD 18. An o-ring seal 238 prevents fluid from exiting the top of the shaft 220, except through the discharge tube 236.

If the normal purge valve were not removed during cleaning, the purge shaft 220, which becomes contaminated with shake/cone mix during normal use, would not be cleaned. If the purge valve were merely removed during cleaning, the cleaning solution would not travel through the draw valves because it would be exhausted through the purge valve, and the draw valves would not be cleaned.

Thus the purpose of the CIP (clean in place) purge valve 230 is to (1) limit the back pressure in the barrel to around five psi, to prevent damage to the dispenser's seals and internal tubing, and yet permit cleaning of the draw valves, and (2) to permit a sufficient flow of fluid through the port 216 and purge shaft 220 to clean these parts of the CSD machine. Also, the vented purge valve 230 eliminates air that the mix pumps 30 and 36 inject into the cleaning solution. During normal operation the mix pump injects air into the shake/cone mix to provide a smooth creamy texture to the ice cream, but this air must be removed to facilitate the cleaning of the top of the barrels and the backs of the cone and shake doors. Without the elimination of air from the barrels during cleaning, an air pocket would remain in the barrels and would inhibit the cleaning chemicals from coming into contact with the upper surfaces inside the barrels.

Controller: Hardware

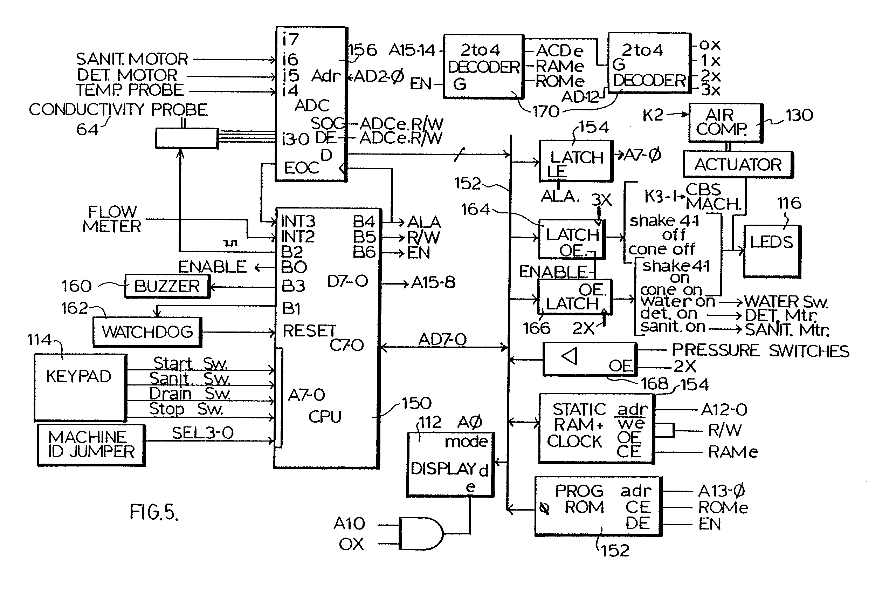

Referring to Figure 5, the central component of the controller 50 is a central processing unit (CPU) 150, which is a model TMS 70C00 microcontroller made by Texas Instruments in the preferred embodiment. The software for the CPU 150 is stored in a read only memory ROM 152. A battery backed static RAM and clock chip 154 (e.g., either Mostek part 48T02 or Dallas part DS1216C) provides a real time clock and also a nonvolatile memory for storing data. In the preferred embodiment, scratch pad memory is provided by the microcontroller 150.

The microcontroller 150 has four ports A, B, C and D. The A port receives logical input from the four keys on the control panel's keypad 114, and a four bit identifier SEL3-0 from the machine ID jumpers in the CSD'S control box 34.

The B port is used to output several control signals (enable, EN, R/W and ALA), a buzzer signal, a watchdog signal, and a conductivity probe signal. The purpose of each of these signals will be explained below.

The C port is coupled to the controller's data bus 152, and the D port outputs the top half of the system's address bus A15-A8. The lower half of the address bus A7-A0 is generated by enabling the ALA signal (on line B4 of the B port) and thereby latching the contents of the data bus 152 in latch 154.

The microcontroller 152 also has one internally generated interrupt (INT2, a timer interrupt that occurs every 0.4883 milliseconds) and two externally generated interrupts: INT1 generated by the water flow meter 44, and INT3 generated when the controller's analog to digital converter (ADC) 156 completes the conversion of an analog input signal.

A buzzer 160 is provided so that the system's user can be alerted when a problem arises - or if the cleaning process is complete. The buzzer 160 is controlled by a binary signal, B3, from the microcontroller's B port.

The watchdog circuit 162 is a typical activity monitor that resets the system, by pulsing the microcontroller's Reset line, if no activity is detected on the B1 line of the B port. As described below, the B1 line is normally pulsed once every 0.125 seconds, and thus the watchdog 162 is designed to generate a reset if it sees no activity on B1 for a period of approximately 0.5 seconds.

The display 112 is a four line LCD circuit (e.g., an LM044-L made by Hitachi). This display 112 is normally used to communicate the current status of the system 20 to the user, but it is also used to view the data log (reflecting the time of completion and the problems encountered during previous uses of the system) stored in the system's nonvolatile memory 154.

Output latches 164 and 166 provide the control signals for the draw valve actuators (Shake4-1 On/Off, Cone On/Off), the CSD's cone and shake product pumps (K1 and K2), the shake spinners (K3), Water solenoid, detergent pump, and sanitizer pump. The draw valve actuator signals also go to the LEDs 116 on the control panel 110, showing the current position of each draw valve.

Logical (binary) input signals, representing the current state of the pressure switches on the five pumps 80-88, are read in by buffer 168 when mode signal 1X is active.

The controller's mode of operation is determined by a decoder circuit 170 which decodes the top four address lines A15-A12 as shown in Table 1.

TABLE 1

| A15-A12 value | Mode Signal | Circuit Enabled |
|---|---|---|
| 0000 | 0X | Display |
| 0001 | 1X | Logical Input Buffer |
| 0002 | 2X | Output Latch 166 |
| 0003 | 3X | Output Latch 164 |
| 01-- | ADCe | A-to-D Converter |
| 02-- | RAMe | RAM and Clock 154 |
| 03-- | ROMe | Program ROM |

The ADC 156 works as follows. An input address between seven and zero is latched in from data bus lines AD2-0 whenever the ALA signal (from port B, line B4) goes high. The analog signal on the ADC's input port at the specified address is sampled for conversion when the ADC's SOC line goes high - which happens when ADCe is high and R/W is low. When the ADC 156 completes the conversion process it generates a signal on its EOC (end of conversion) line-which activates the INT3 line on the microcontroller 150. This calls the INT3 interrupt routine, which sets ADCe high and R/W high so that the ADC's digital output is enabled (because its OE line goes high). The microcontroller reads the digital value generated by the ADC from the data bus 152, and stores this value for later use. A more detailed description of how each analog input signal is processed is provided below in the sections describing the corresponding portions of the control software.

Figure 1D shows that each of the syrup line pumps 82-88 is turned on when its corresponding pressure signal is low, and that the cone line pump 80 is turned on when its pressure signal is low and the fourth syrup line pump 82 is also on, thereby reducing the duty cycle of the cone line pump and reducing the amount of stress on the cone pressure line 32.

Conductivity Measurement Circuit.

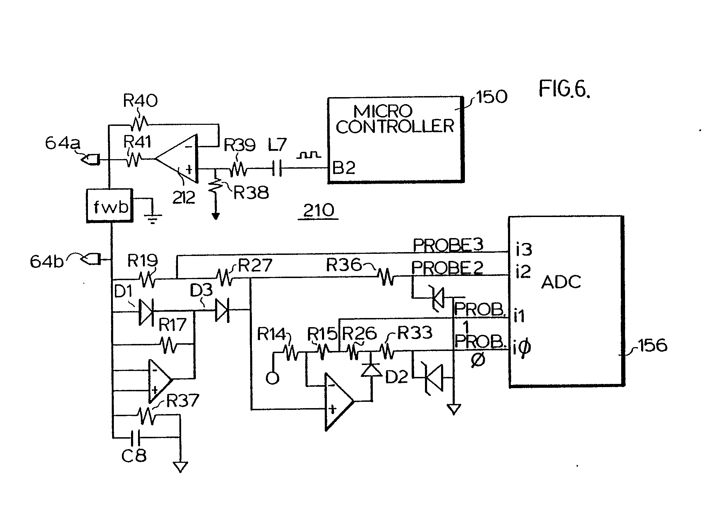

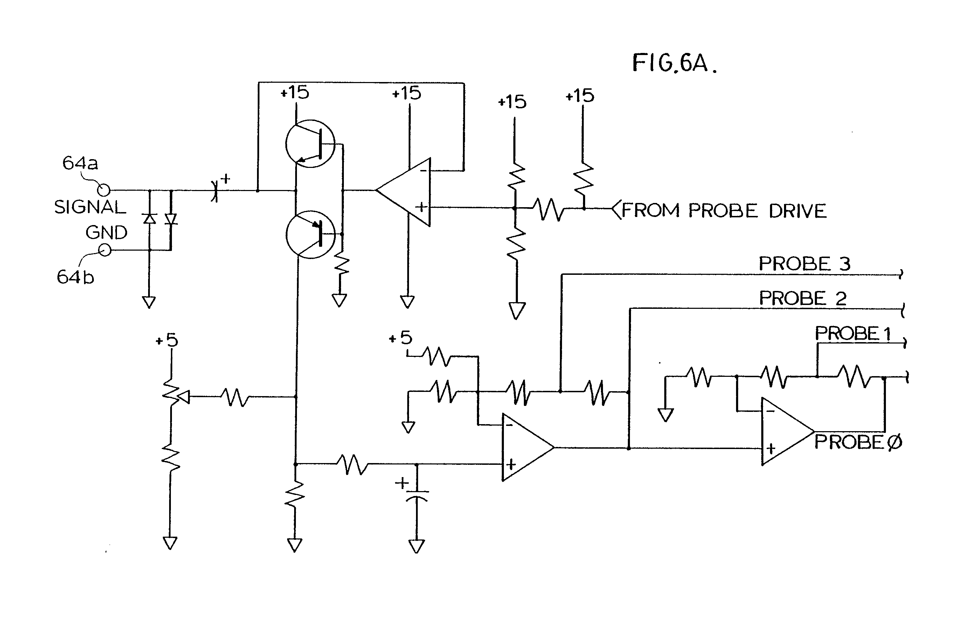

Referring to Figure 6, the conductivity measurement circuit 210 works as follows. A one kilohertz square wave is generated by the microcontroller 150 on port B2, which is a.c. coupled to conductivity probe 64a through an RC filter C7-R39-R38 and amplifier 212 (with feedback resistors R40 and R41).

The basic operation of the conductivity probe is as follows. The controller 50 periodically samples the conductivity of the medium between the conductivity probe's two elements. The resulting measurement is compared with a specified conductivity range to determine if the fluid in the tank 40 is within the specified concentration range. In the preferred embodiment, an allowed conductivity range is specified for every "step" of the cleaning process. Thus the system can test the concentration of a detergent solution, the concentration of a sanitizer solution, and the purity of rinse water. Furthermore, since the detergent and sanitizer chemical solutions typically have nonoverlapping conductivity ranges, the system will detect a problem if detergent is substituted for sanitizer, or vice versa.

The occurrence of a sudden voltage change on the first probe 64a causes current to flow between the first and second probes 64a and 64b. The resulting signal on the second probe 64b is proportional to the conductance of the water solution in the mix tank.

In order to minimize the effect of the water's capacitance on the conductivity measurement, the signal on the second probe 64b is measured as soon as possible after the voltage change (from a high voltage to a low voltage) on the first probe 64a. With the microcontroller used in the preferred embodiment, the second probe signal is measured (i.e., sampled and held by ADC 156) approximately ten microseconds after the B2 square wave signal is toggled from a high to a low state.

The measurement circuit 210 divides the measurement into four conductivity ranges because an 8-bit ADC is used, and the range of conductivity levels which need to be measured requires more than eight bits of accuracy. Four distinct signals Probe3 - Probe 0 are generated and are read by the microcontroller 150 through the i3 - i0 ports of the ADC 156. Each of the four conductivity signals is proportional to the mix tank water's conductivity when the conductivity is in a corresponding range.

10

In an alternate embodiment of the invention, a 12-bit ADC could be used, which would increase the cost of the system. In this embodiment a single conductivity measurement could take the place of the four used in the preferred embodiment and, as will be understood by those skilled in the art, the corresponding circuit 210 would be considerably simplified.

Both probes 64a and 64b are coupled to a full wave bridge rectifier solely for the purpose of using the diodes therein to clamp both probes to a voltage not greater than approximately 0.5 volts higher than the system's ground voltage. This protects circuit 210 from transient and/or extraneous voltages.

The Probe3 signal is used for measuring the highest range of conductivity values, the Probe2 signal is used for measuring the next lower range of conductivity values, and so on. Each step down to a lower range of conductivity signals increases the measurement's sensitivity to the water's conductance by a factor of approximately 2.72 (i.e., $e^1$). Thus if a value of ten was measured on input-3 to the ADC, the corresponding values would be approximately 27.2 on input-2, 73.0 on input-1 and 201.2 on input-0.

Figure 6A shows an alternate conductivity measurement circuit which also produces four ranges of conductivity signals Probe3-0, but which is less dependent on quick sampling of the Probe3-0 signals after the drive signal B2 is toggled.

Control Software

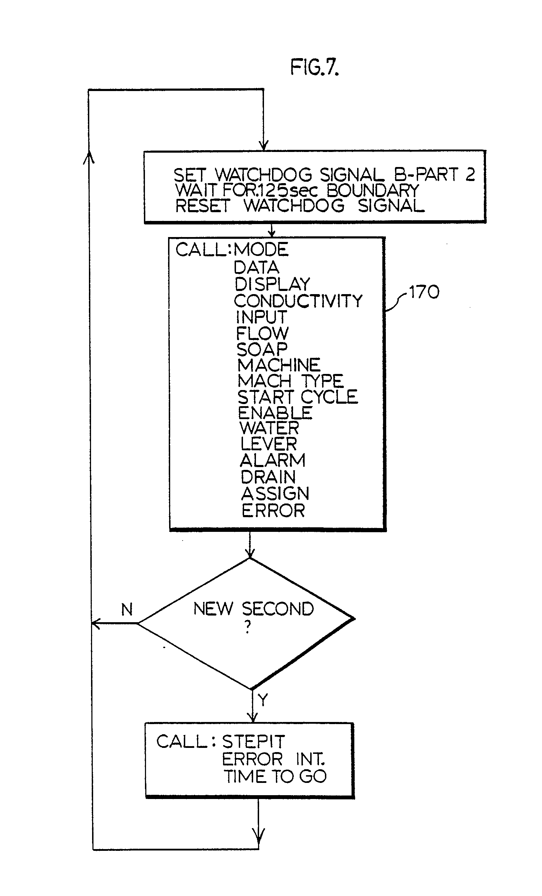

Figure 7 shows a flow chart of the main loop for the CIPS's control program. The main loop is executed once every 0.125 seconds. After the loop finishes execution, the watchdog signal (line B1 of port B) is set. Then the system waits for the next 0.125 second boundary, resets the watchdog signal, and begins execution of the routines called in box 170.

Once each second (box 172) the routines named in box 174 are called.

Task Sequencing: Step Program.

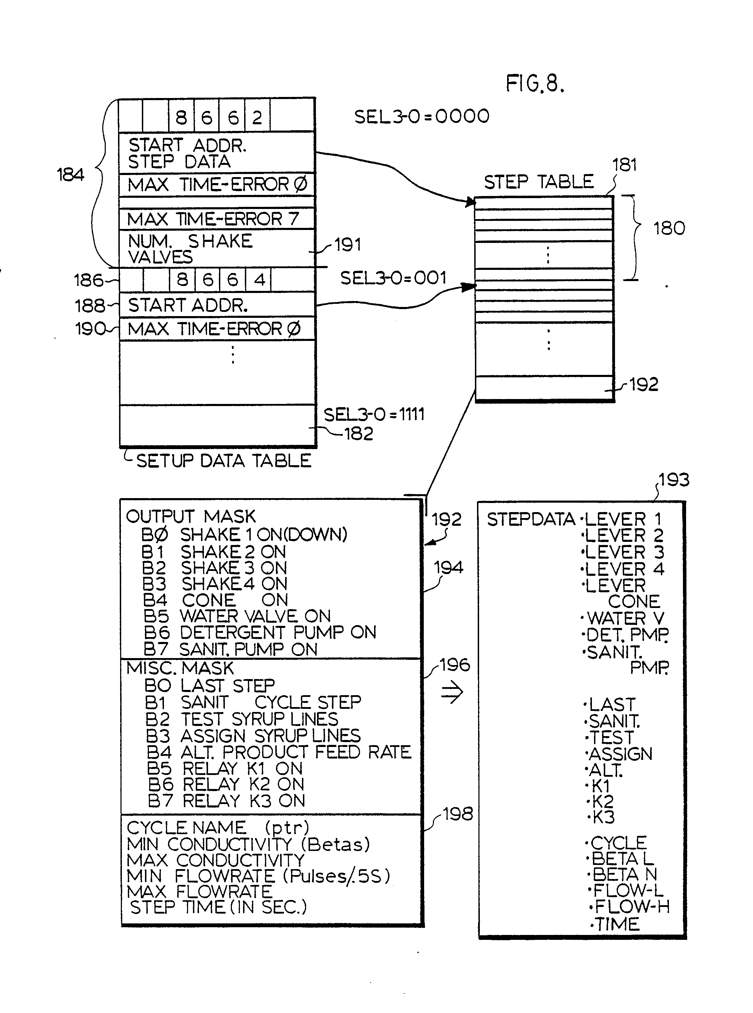

Referring to Figure 8, there is a specified sequence of cleaning steps 180 for each cone/shake configuration that the CIPS 20 can handle. All of the cleaning steps, for all of the CSD configurations, are stored in a data structure called the Step Table 181. In the preferred embodiment the configuration is identified by the value of SEL3-0.

The Setup Data Table 182 has sixteen entries 184 for the sixteen possible values of SEL3-0. The entry 184 for each CSD configuration contains the following information: a seven character string (seven ASCII characters) 186 which identify the CSD model or configuration; the address 188 of the first step of the cleaning process for this CSD configuration; a set of time threshold values 190 which specify the maximum length of time that each of eight error conditions can persist before the condition will be denoted as a persistent error; and the number of shake draw valves 191 in the CSD configuration. A list of these error conditions is shown in Table 2.

## TABLE 2

| Error # | Description of Error Condition |
|---------|-------------------------------|
| 0 | Mix Pump Flow Problem |
| 1 | Water Supply Problem – Flow Rate Too Slow |
| 2 | Low Water Temperature |
| 3 | Sanitizer Supply Problem |
| 4 | Detergent Supply Problem |
| 5 | Leaking Syrup Line(s) |
| 6 | Clogged Syrup Line(s) |
| 7 | Clogged Drain Line |

Note that any step program 180 could be used for two or more configurations, simply by using the same start address 188 for each of those configurations.

Each step 192 in the step table 180 contains eight bytes of information. This information is copied into the StepData data structure 193 shown in Figure 8 when the system is ready to "execute" or use the step.

The first byte 194 of each step contains eight on/off control bits for the shake and cone actuators, the water valve 42, the detergent pump 52, and the sanitizer pump 54. Note that while the five shake and cone actuator bits are noted in Figure 8 as being for four shake actuators and one cone actuator, the division of these bits between shake and cone actuators will vary from CSD configuration to configuration.

Before explaining the items in the second byte 196 of the step data structure 192, the following background information is provided. First, each step program has many steps, and the last step is marked with a "LAST step" flag so the system will know that the cleaning program is finished.

Second, a typical step program includes rinsing, detergent, sanitizing, and draining steps. In most restaurants the full step program will be run each night, but only the sanitizing and draining steps will be run in the morning before the cone/shake maker is used. One of the keys on the control panel is marked "Sanitize Only". Pressing this key instructs the CIPS to perform only those steps flagged as a "sanitize cycle step".

Third, the syrup lines can be tested for leaks and blockage by testing the pressure switches 92 on the pumps. Leaks are indicated by low pressure signals for draw valves that are programmed to be closed, and blocked lines are indicated by high pressure signals for draw valves that are programmed to be open.

Fourth, the pressure switches 92 can also be tested at the beginning of the step program to determine which pump 80-88 (and cleaning line) is coupled to the same syrup channel as each of the draw valve actuators 124. This is done by activating one actuator, thereby opening one syrup draw valve, and testing to see which pressure switch indicates a low pressure condition.

Fifth, the detergent and sanitizer pumps can be driven at two different rates: the so-called normal rate for mixing the chemical with water "on the fly", and a faster "alternate" rate for initially adding the chemical to clear water.

The second byte 196 of each step contains on/off control bits for the K1, K2 and K3 relays, and five flags for indicating: (B0) if this is the last step of the step program, (B1) if this step is to be used when a "Sanitize Only" cycle is running; (B2) if the syrup lines should be tested for leaks; (B3) if the system should test the pressure switch signal to determine which syrup pump 80-88 corresponds to the shake draw valve which is currently open (i.e., on or down); and (B4) if an alternate product feed rate should be used for the duration of this step.

The last six bytes 198 of each program step contains: (1) a pointer to a line of text to be displayed on the second line of the display, which identifies the cleaning step currently being performed; (2 and 3) the minimum and maximum acceptable conductivity of the solution in the mixing tank; (4 and 5) the minimum and maximum acceptable flow rate of water into the mixing tank; and (6) the duration of this step.

Thus, a different conductivity range can be specified for each step of the cleaning process. This enables the system to detect problems with the rinse water, the amount of detergent in the water, and the amount of sanitizer in the water.

Typically, the water supply must be able to provide water at a rate of at least three gallons per minute. In the preferred embodiment, water flow is measured in units of "flowmeter pulses per half second". Since the flow meter generates 1160 pulses per liter, each flow unit represents approximately 0.1 liters per minute (which is equivalent 0.027 gallons per minute, or 3.5 ounces per minute) for the particular flowmeter being used in the preferred embodiment.

- Data Structures.

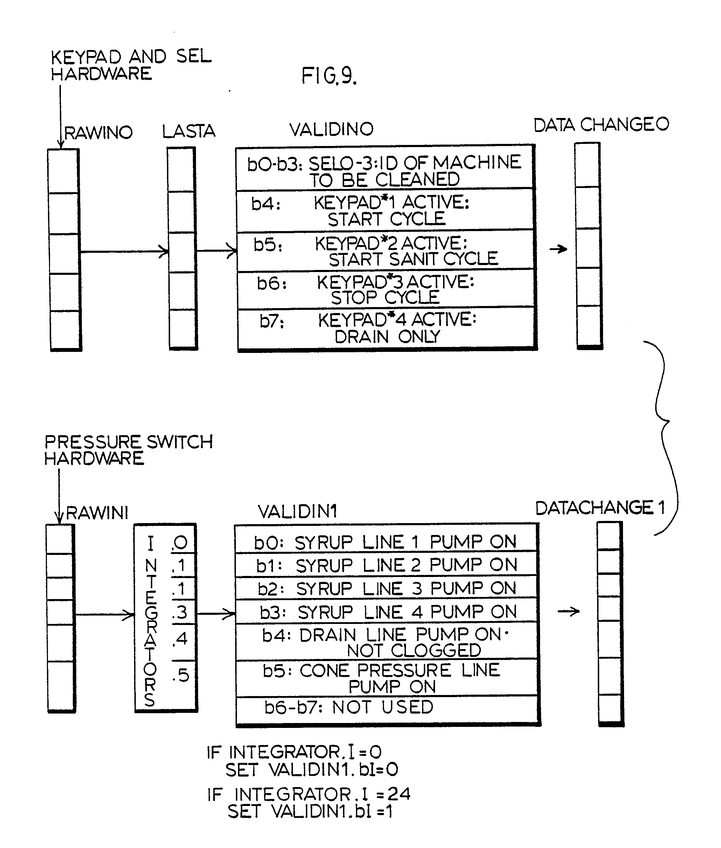

Referring to Figure 9, logical (i.e., binary) input signals are stored in two variables, called VALIDIN0 and VALIDIN1. Each bit of these variables can be referenced as follows: bit n of VALIDIN0 is represented herein as VALIDIN0.bn. The value represented by each of the logical input signals in shown in Figure 9.

Generally, each component of a data structure is referenced herein as VariableName.Component.

As shown in Figure 9, the logical input signals are debounced or integrated before being stored in the data structures VALIDIN0-1 for validated logical input signal. Also, changes in the validated data are denoted in two data change data structures Datachange0-1, so that the control software can respond to changes in input signals (e.g., by responding only when a key on the control panel is first pushed). The logical INPUT routine which handles the input signal debouncing and integration process is discussed below.

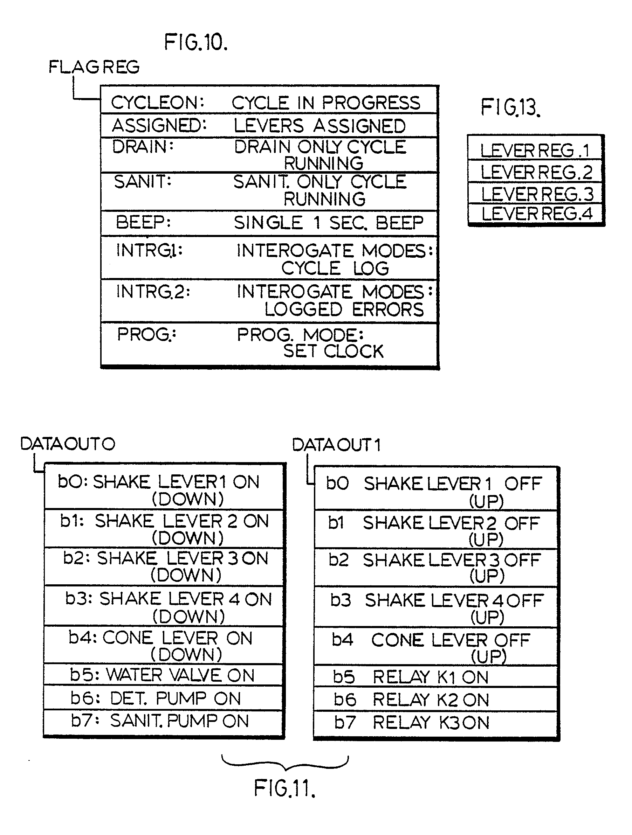

Figure 10 shows the FlagReg data structure used to keep track of the current status of the system. The bits of this data structure are referenced as FlagReg.CycleOn, FlagReg.Assigned, and so on. The role of each bit flow is shown in Figure 10 and is further explained below.

Figure 11 shows the data structures used to store the output signals which control the draw valve actuators, the water value, the detergent and sanitizer pumps, and the K1 - K3 relays. These data structures are periodically latched into the output latches 164 and 166 shown in Figure 5.

Figure 12 depicts the ErrorFlag, ErrorLog, and ErrorINT data structures used to keep track of error conditions, and also the Status Report Log data structure used to store records of completed and aborted cleaning cycles.

Each bit of the ErrorFlag register is used to indicate the presence of an error condition at the current time. The ErrorINT data structures is a set of down counters used to determine if the amount of time that each error condition has persisted exceeds a specified time limit. When any of the ErrorINT integrators reaches a value of zero, the corresponding error is marked as a persistent error in the ErrorLog data structure. The eight error conditions tracked by the system are indicated in Figure 12.

When a cleaning cycle is completed, or automatically aborted by a clogged drain condition, a record of the cycle is stored in the system's nonvolatile memory. The data structure which stores this information is called the Status Report Log, and it has room for 366 reports. Each report indicates the data and time the cycle ended, the type of cycle that was run, the model of the cone/shake maker that was being cleaned, and the error flags logged as persistent errors during the cleaning cycle.

Once a report has been stored, the user cannot alter the report. In fact, the only way that new data can be recorded is by running a cleaning cycle. When the Status Report Log is full, each new report overwrites the oldest report in the Log. If the CIPS is used once a day, the Status Report Log will hold one full year of status reports.

The format for each report is shown in Figure 12. As indicated in Figure 12, the error flags stored in each report comprise a copy of the ErrorLog data structure at the end of the cleaning cycle.

Figure 13 depicts the LEVERREG data structure for denoting which syrup line pump corresponds to each shake draw valve actuator used in the preferred embodiment.

INT1: Flow Meter Interrupt.

Every time 0.862 milliliters of water flow past the flow meter 44 it generates a pulse that makes the microcontroller 150 call its "Interrupt #1" subroutine (called INT1 in the Figures). This routine simply increments a variable called FLOWCNT, which is later used to determine the amount of water added to the mixing tank.

INT2: Timer Interrupt.

The microcontroller generates an internal timer interrupt approximately every 500 microseconds (actually once every 0.4883 milliseconds, so that there will be 2048 interrupts per second), which calls the "Interrupt #2" (INT2) subroutine.

The tasks performed by the timer interrupt are as follows. The conductivity probe signal, line B2 of the B port, is toggled - thereby generating a one kilohertz square wave.

- Pump control.

Both the detergent and sanitizer pumps have d.c. motors. The speed of these pumps is controlled by measuring the back emf of both pumps, comparing the measured value with a preselected target speed value, and then adjusting the width of the pump's drive pulse accordingly. The widths of each drive pulse is controlled by a pulse width counter. Whenever one of the pumps is running, its pulse width counter is set to a calculated value once every 32 milliseconds and its drive pulse is turned on. Then its pulse width counter is decremented every 500 microseconds until the counter reaches zero, at which time the drive pulse is turned off until the next 32 millisecond time slot.

- ADC input.

Every 500 microseconds an interrupt counter INTCNT is decremented. The ADC is programmed to convert one of its analog inputs only if the two least significant bits of INTCNT are zero and the value of bits 5-2 of INTCNT (INTCNT.b5-2) is less than twelve. To start the ADC, it is sent an input address of INTCNT.b4-2 and a "start conversion" signal.

Thus, for every sixty-four timer interrupts, each of the four conductivity probe lines will be sampled two times, and the other lines will be sampled one time.

- Output Buffers.

Every time the timer interrupt runs, the output control signals in Latches 164 and 166 are updated by sending the data in the DATAOUT0 variable to Latch 166, and sending the data in the DATAOUT1 variable to Latch 164.

## INT3: End Of ADC Conversion Interrupt.

The "Interrupt #3" routine is called when the ADC generates and "end of conversion" signal. The task performed depends on the input signal converted by the ADC, which was determined by the value of bits 2, 3 and 4 of INTCNT.

For the four probe signals, the converted digital value is just added to a corresponding accumulator - which helps adjust for noise in the conductivity probe. The conductivity routine, discussed below, periodically averages the accumulated probe signals.

For temperature, the converted digital value is compared with low and high limits. If the converted digital value is within these limits, the measurement value is converted to a Celsius temperature value by finding the closest value in a temperature lookup table, and then the temperature is stored in a variable called TANKTEMP. Otherwise a low or high flag value is stored in TANKTEMP.

For the detergent and sanitizer pumps, the converted digital value corresponds to the strength of the back emf from the pump. If, however, the pump is not scheduled to be on, then the measurement is ignored. Otherwise an error signal is developed by subtracting the measured back emf from a target value. Then a new drive pulse width is calculated and the drive pulse is set to turn on for a period of time equal to the calculated pulse width. The new pulse width is calculated to be:

$$PWM = G1^*Spd + G2^*E + G3^*dE/dt + G4^* \int E \, dt$$

where Spd is the target pump speed, E is the error signal, de/dt is the derivative of the error signal (or E - the previous value of E) and $\int E \, dt$ is the integral of E.

## MODE Routine.

Referring to Figure 3, the STOP button on the control panel can be used to control the mode of the CIPS 20, but only when the system is not in the middle of a cleaning cycle. By holding down the STOP button for 5 seconds, the system is put in "Interrogation Mode" for reviewing records of past cleaning cycles. Holding the STOP button for 10 seconds puts the system in "Program Mode", which is used for programming the date and time stored in the system's clock.

In Interrogation Mode, the user can review the status reports stored in the system's memory for the last 366 completed (or automatically aborted) cycles. Note that in the preferred embodiment, manually stopped cycles and Drain Only cycles are not logged.

The format for storing status reports is shown in Figure 12. The log has 366 slots which are used serially, wrapping back around to the top when the last slot has been used. A pointer called NextRecord points to the slot to be used to store the next status report, and a pointer called ViewRecord points to the record to be shown on the Display in Interrogation Mode.

As shown in Figure 12, each status report occupies five bytes of memory and specifies the date and time that the reported cycle was completed or stopped, the type of cycle that was run (e.g., full cycle, or sanitizer cycle), the model of the cone/shake maker that was being cleaned, and error conditions detected during the cycle.

## DATA Routine.

The data routine is used only in Interrogation and Program Modes. This routine lets the user use the buttons on the control panel in much the same way as the buttons on a digital watch which includes an internal notepad memory.

In Interrogation Mode, the user moves through the records in the status report log by using the Cycle Start button to move backwards in time (upwards in the log) and the Sanitize Only button to move forwards in time.

The first four line display for a selected status record shows the date, time, cycle type and machine model for the logged cycle. The Drain Only button is used to access two additional displays: the first display shows the logged status for the first four stored error flags, and the second display shows the last four stored error flags. Continued use of the Drain Only Button cycles the display through all three displays for the record.

The Stop button is used to return to Normal Mode - from which a new cleaning cycle can be started.

In the preferred embodiment, the system is automatically put into interrogation mode at the end of each cleaning cycle that results in the storage of a status record (i.e., a full cleaning cycle, or a sanitize only cycle).

In ClockSet Mode, the date and time are displayed. As with many digital clocks, one button (here the Drain Only button) is used to select the portion of the date/time to be updated (hour, minute, second, month, day, year) by pushing the button until the display indicates that the item to be updated has been selected. The selected date/time item is denoted by flashing it on and off two times per second. Once the item to be changed has been selected, the Cycle Start button is used to increment the item, and the Sanitize Only button is used to decrement the item.

## DISPLAY Routine.

The Display routine controls the contents of the display, which depend on the system's mode of operation. In Normal Mode, the content of the display is generally as shown in Figure 3. The first display line identifies the model number of the cone/shake maker connected to the system. The text following the words "MODEL NUMBER" is taken from the Setup Table shown in Figure 8, using the SEL3-0 signal as an index.

The second line of the display, in Normal Mode, displays the text pointed to by the Cycle Name pointer in the step 192 currently being run. If no step is being run (e.g., when the machine is not running a cleaning cycle), this line remains blank.

The third line of the display shows the amount of time left to go before the current cleaning cycle will be done. This is derived from a variable called TimeToGo, which is updated once a second during cleaning cycles.

The fourth line is a message line which indicates what, if any, error conditions have been detected during the current cleaning cycle - as specified by the Error Flag Register shown in Figure 9.

Table 3 is a table of display messages, including the error messages used on this fourth line in Normal Mode.

In Interrogation Mode, the Display routine unpacks the data stored in the Status Report Log and formats it for display, as described above in the discussion of the Mode and Data routines.

In Clockset mode the Display routine displays the current date and time, and updates the display as the user programs in a new date and/or time. Also, the date/time item selected for updating is flashed on and off twice per second.

## CONDUCTIVITY Calculation Routine.

The four outputs Probe3 - Probe0 of the conductivity circuit 210 (see Figure 6) are sampled and digitized by the system's ADC approximately once every 16 milliseconds, under the control of the INT2 and INT3 routines as discussed above. These measurements are averaged by adding all 32 measurements for each signal in correspond ing accumulators PRB3 - PRB0, and then dividing the accumulated results by 32.

Once every half second, after each Probe sense value has been sampled 32 times, a conductivity value is calculated based on this data.

Since relatively low value measurements are subject to more noise than those in the middle of their dynamic range, the preferred method of the invention is to select the highest sensitivity conductivity signal which has a value below the maximum level for that signal. The dynamic range of the ADC is eight bits, or zero to 255. In the preferred embodiment, the Probe3 through Probe1 signals are not used unless their value exceeds 75, and even the Probe0 signal is rejected as noise unless its value exceeds 36.

--Logarithmic Scaling.

In the preferred embodiment conductivity is measured in logarithmically scaled units called Beta units. This provides a conductivity (and cleansing agent concentration) measurement mechanism which is accurate over a wide range of conductivity/concentration levels. Each Beta unit corresponds to approximately a five per cent (actually a 5.12711%) increase in the conductivity of the mix tank water, which corresponds approximately to a five per cent increase in detergent or sanitizer concentration. Twenty Beta units represent a change in conductivity of 271.8%, and each of the ProbeX measurement signals output by the Conductivity circuit 210 are offset from its neighbors by twenty Beta units.

The conductivity measurements are also temperature adjusted because temperature affects the conductivity of water solutions. One advantage of the logarithmic conductivity measuring method is that it allows the system to be easily recalibrated if the detergent and/or sanitizer chemicals are changed. Most aspects of the present invention could be implemented using a linear conductivity measuring method, but the logarithmic method used herein is clearly preferred.

- Conductivity Calculation.

The Conductivity Calculation routine runs once each half second. After the average Probe3 through Probe0 values have been calculated, the routine calculates a logarithmically scaled conductivity value in "Beta" units. To do this the routine looks for the highest range ProbeX signal (from the conductivity circuit 210) which is in a predefined reliable measurement range (e.g., values greater than 75) and assigns an "Abscissa" value corresponding to the selected Probe measurement range. The Abcissa for each ProbeX sense value differs from its neighbors by 20 Beta units.

The routine then calculates a "Mantissa" value by finding the largest value in the LogTb1 lookup table (shown in Table 4) which is less than the selected ProbeX value and assigning the index of that value to the Mantissa.

The conductivity value in Beta units is equal to the sum of the Abcissa and the Mantissa. However, this value is adjusted by 1.8% (0.36 Beta units) for each degree Celsius:

Beta = Abscissa + Mantissa + 0.36(TANKTEMP - 25).

INPUT Routine.

Referring to Figures 5 and 9, the INPUT routine reads in and debounces the logical (i.e., binary) inputs to the controller 20.

The inputs to the microcontroller's A port - the Keypad inputs and the model selection signals SEL3-0 (see Figure 5) - are initially stored in a variable called RAWIN0. If these inputs have the same values as during the last call to the INPUT routine, the inputs are copied into a variable called VALIDIN0 (see Figure 9). Thus these signals have be steady for at least 0.125 seconds to be stored in VALIDIN0.

If the A port inputs are not the same as they were on the last pass through the main loop, the signal values are stored in a variable called LASTA for use during the next main loop call to the INPUT routine. Also, whenever a new keypad key is pressed by the system's user, the corresponding bit is set in a data structure called DataChange0 (and the system's beeper is activated for 10 milliseconds to assure the user that the system received the user's command). The flag in DataChange0 is cleared by which ever routine (such as the Data routine discussed above) responds to the key stroke.

The INPUT routine also debounces the six pressure switch signals (for the four syrup lines, the cone pressure line, and the drain line) input to buffer 168 (see Figure 5) by integrating each of the pressure switch signals. The procedure works as follows: for each of the six pressure signals, an integrator is incremented if the signal is high, and is decremented if the signal is low, once each main loop pass.

The integrators are clamped on the low end at zero and at twenty-four on the high end. Further, when an integrator hits the top clamp value the corresponding validated input flag, called VALIDIN1.bX (where X

16

identifies the pressure switch), is set high, and when the integrator hits the bottom clamp value the corresponding flag is set low. Thus each switch flag is debounced in that the switch flag remains at its current value until the corresponding switch maintains the opposite state for at least three seconds (twenty-four main loop cycles). Finally, whenever a new "1" bit is written into VALIDIN1, the corresponding bit is also set in DataChange1.

## FLOW Routine.

The FLOW routine, which runs once each half second, computes a total water flow value FLOWTOT, and a flow rate FLOWRATE from the number of flow meter pulses FLOWCNT received during the last half second. As described above, the flow meter generates one pulse for each 0.862 milliliters of water which flow into the mix tank from the water supply.

## SOAP Routine.

This routine computes a motor speed for either the detergent or sanitizer pump, if either one is enabled. The computed motor speed is equal to the water flow rate into the mix tank times a calibration constant. Different calibration constants can be provided for the detergent and sanitizer pumps, and alternate calibration constants can be provided for precharging the mix water at a faster rate. The computed speed is then averaged with the previous motor speed to smooth motor speed changes.

## MACHINE Routine.

This Routine simply puts the K1, K2 and K3 control bits from the current step (in the step table) into the DATAOUT1 variable, so that the spinners (K1), shake pump and mixer (K2), and cone pump and mixer (K3) in the cone/shake maker will be turned on and off according to the schedule in the step table 181.

## MACH-TYPE Routine.

This routine, which runs only when the system is not in the middle of a cleaning cycle, copies the debounced model identification signal SEL3-0 from the lower nibble (i.e., 4 bits) of VALIDIN0 (see INPUT routine) into a variable called MACHINE, which is used to index into the Setup Data Table 182 (shown in Figure 8).

## START-CYCLE Routine.

This routine responds to the Cycle Start, Sanitizer Only and Stop buttons on the control panel when the system is in Normal mode. To start a normal cleaning cycle the routine finds the Set up data for the machine attached to the CIPS 20, and then initializes the StepData, FlagReg, TimeToGo, and error logging data structures. For Sanitize Only cycles, the TimeToGo includes only steps flagged as sanitizer steps (StepData.Sanit = 1).

When the Stop button is pushed, or no cycle is running, this routine clears the StepData, data output, and TimeToGo data structures, thereby making or keeping the system inactive.

## ENABLE Routine.

If a cleaning cycle of any type (full, sanitize only, or drain only) is currently running, then this routine sets the Enable signal (b0 on the B port). This enables the output latches 164 and 166 (see Figure 5) which control the draw valve actuators, the cone/shake maker, the water valve, and the cleansing chemical pumps.

WATER On/Off Routine.

This routine closes the water valve if (1) the drain line is plugged (i.e., if the drain pressure switch flag is on), (2) the system is not running a cycle, or (3) if the current step indicates that the water should be turned off. Otherwise, if a cycle is being run and the current step indicates that the water should be turned on, then the water valve is opened.

LEVER Routine.

This routine operates the shake and cone draw valves (sometimes called levers) according to the command data in STEPDATA. If the drain is clogged, however, all the draw valves are closed to minimize the flood.

ALARM Routine.

This routine turns on the buzzer at different beep rates for different error conditions. In order of priority the error conditions are:

| Detected Error | Buzzer/Alarm |
| --- | --- |
| clogged drain | on continuously |
| conductivity | 8 hertz |
| low water flow | 4 hertz |
| syrup line | 2 hertz |

If a clogged drain condition is detected, the buzzer is turned on and left on until the condition is cleared or the cycle is terminated.

If a detergent or sanitizer problem is detected (i.e. if the measured conductivity is outside the specified range) the buzzer is turned on and off at a rate of 8 hertz.

If the rate of water flow is less than a predefined rate, the buzzer is turned on and off at a rate of 4 hertz. If the syrup lines are leaking or clogged, the buzzer is turned on and off at a rate of 2 hertz.

Finally, there is a one second buzzer flag FlagReg.Beep which causes the buzzer to sound for one second when it is set (e.g., at the end of a cleaning cycle).

DRAIN Routine.

The purpose of a "drain only" cycle is to remove all water from both the mix tank and the cone/shake maker. A drain only cycle can be started only if the system is not in the middle of a cleaning cycle, and is not in Interrogate or ClockSet mode.

Under these circumstances, pushing the Drain Only button once will start a "Drain Pan Only Cycle", which activates the drain pump 104 for approximately one minute, with all of the draw valves closed. The purpose of a Drain Pan Only Cycle is to empty any excess water remaining in the drain pan 100.

Pushing the Drain Only button a second time will start a one step cleaning "Full Drain Only" program in which all the draw valves are opened, both mix pumps in the CSD 18 are turned on but the spinners are turned off, the water supply and cleansing chemical supplies are off, and the cycle is run for four minutes. The conductivity and flow rate limits are set to "don't care", and the display is set to display "Drain" for a drain cycle on line two of the display. The purpose of a Full Drain Only cycle is remove all of the water from the mix tank 40, the cone and shake freezer barrels, the various fluid lines in the system, and from the drain pan 100.

If the Drain button is pushed in the middle of a Full Drain Only cycle it has the same effect as pushing the Stop button - the cycle is stopped.

ASSIGN Routine.

This routine runs only when the "assign" bit in the StepData for the current step is assigned. Its purpose is to assign syrup line pumps to their corresponding draw valve actuators. Also, only one draw valve can be open when this routine runs.

The routine works as follows. First the routine checks that only one draw valve is open. Then it looks at the pressure switch signals to find a syrup line which is at low pressure, and assigns that line to the draw valve which is open, by storing the syrup line number I for lever B in LEVERREG.B (see LEVERREG data structure in Figure 13).

If none of the pressure switch signals are off, then a "clogged syrup line" error is flagged. Similarly, if more than one pressure switch signal is off, then a "leaking syrup line" error is flagged.

Once all the syrup draw valves appear to be assigned, the routine checks to see if any syrup line has been assigned to more than one draw valve. If this happens, a "duplicate assignment" error flag is set. Otherwise a "levers assigned" flag is set to indicate that the assignment process was successfully completed.

ERROR Routine.

When an error condition is detected, its presence is flagged in a register called ErrorReg. When the error persists for at least a specified time threshold, this fact is logged in a register called ErrorLog. The ERROR routine detects error conditions; the ERRORINT routine determines if an error condition has persisted long enough to log it as a persistent error. This scheme is used because many error conditions are transitory condition caused by minor leaks, temporary or partial line blockages, mechanical stretching, and even electrical signal noise.

The ERROR routine looks for certain error conditions and sets the corresponding error flags in the variable called ErrorFlag. This routine runs only when the system is running a cycle. In drain cycles, only the drain pressure switch is checked.

During normal cleaning and sanitizer cycles, the ERROR routine performs the following tests.

First the rate of water flow into the mix tank is compared with the minimum and maximum flow rates specified for the current step. If the specified limits are the "don't care" values - zero for the minimum, and 255 (i.e., FFH) for the maximum, the flow rate test is skipped.

If the specified minimum flow rate is given a nonzero value, but the specified maximum is "don't care", the water flow test is a test of the capacity of the water supply. This test is generally run at the beginning of a cleaning cycle to make sure that the water supply will be sufficient. If the measured water flow rate is too slow, it is flagged as a Low Water Flow error in the ErrorFlag data structure (see Figure 12).

If both the specified minimum and maximum flow rates in the step table are used (i.e., neither is set to "don't care"), then the system will check that the shake and cone mix pumps are drawing water at a reasonable rate. If the measured water rate is not between the specified limits, the flag called ErrorFlag.b0 is set to indicate that a "Mix Pump Problem" has been detected.

Next, the water temperature is checked to make sure that it is at least 10 degrees Celsius.

If the sanitizer pump is enabled by the current step, the measured conductivity of the water (see the description of the CONDUCTIVITY routine above) is compared with the specified minimum and maximum conductivity values (StepData.Beta-L and StepData.Beta-H) for the step. If the measured conductivity is out of the specified range, a "Sanitizer Problem" is flagged in the ErrorReg.

Similarly, the conductivity is tested if the detergent pump is enabled, and a "Detergent Problem" is flagged if the measured conductivity is out of the specified range.

Finally, all of the pressure switch signals are checked. The syrup line switches are checked to make sure that their state corresponds to the position of the corresponding draw valve. In other words, the syrup line pressure switch signal should be equal to one (indicating a high pressure) for closed draw valves, and it should be equal to zero for open draw valves. If the pressure signal for an open draw valve is high, then the corresponding syrup line is clogged and the "Clogged Syrup Line" flag is set. Similarly, if the pressure signal for a closed draw valve is low, then the corresponding syrup line is leaking and the "Leaking Syrup Line" flag is set.

The cone pressure line should always be open (i.e., with pressure less than 15 psi) because the cone freezer barrel's CIP purge valve should keep the pressure in the cone freezer barrel substantially below 15 psi. As a result, the ERROR routine cannot check for leaks in the cone pressure line. Furthermore, the cone pressure line pump 80 (see Figure 1D) runs only when the fourth syrup line pump is running. Therefore the ERROR routine checks for a clogged cone line by testing for a high pressure on the cone line only when the fourth system line pump 82 is running.

STEPIT Routine.

After each step of the cleaning process is completed, the STEPIT routine gets the data for the next step from the Step Table (see Figure 8) if the cleaning cycle is not over.

The data for each step is copied from the Step Table into an eight byte data structure called StepData. When the last step of the cycle is done, a one second beep is generated by setting FlagReg.Beep.

Note that the first step for a cleaning cycle, which is actually a step of no duration (StepData.Time = 0) is loaded into the StepData data structure by the CYCLE routine, as explained above. Thus, when a new cycle is started, all the levers will be up (closed) and the cleaning system will do nothing until the STEPIT routine picks up the data for the first step of the cleaning cycle.

For "sanitize only" cycles, the StepData.Sanit bit of each step is checked so that only sanitizer steps are used. The STEPIT routine serially checks each step in the step table until if finds a sanitizer step, or it reaches the last step of the cycle.

Also, whenever any of the draw actuators change position, a one second beep is generated. This feature is provided so that the cleaning system 20 can be used even if one or more of its actuators is not working. The user can operate manual draw levers by looking at the level position LEDs on the control panel and changing the lever positions to fit the displayed pattern each time a beep is generated.

When a cycle is over, this routine clears the StepData and DATAOUT variables (to shut the system down) and stores a record of the completed cycle in the nonvolatile memory. The format of these records is shown in Figure 12. However, no record is stored for "drain only" cycles-because drain cycles do not indicate that a cone/shake maker was cleaned.

The STEPIT routine also aborts the cleaning cycle if a clogged drain line condition has persisted for a defined amount of time, and stores a record of the aborted cycle using the same report format as for completed cleaning cycle. However, the record error flags will show that the cycle was aborted because of a clogged drain condition.

ERRORINT Routine.

This routine is run only once per second, and only when the system is in a full or sanitizing cycle. Referring to Figure 12, there are eight ErrorINT.n counters (also called integrators) which are initially loaded with values from the Setup Data Table (see Figure 8) whenever a new cleaning cycle is started. These values specify the maximum amount of time that each of eight error conditions will be tolerated before it is considered to be a serious error which will be noted in the log data for the cycle.

When any error condition is detected, the routine which found the error will set a corresponding bit in the ErrorFlag data structure. This routine decrements the ErrorINT.n counters for each error detected.

Also, when an error counter reaches zero, a corresponding error flag is set in the ErrorLog data structure so that other routines can make decisions (such as to turn on the buzzer) based on the status of the system. At the end of this routine, the Error Flags are cleared so that the error conditions can be tested anew during the next second of operation.

TIME TO GO Routine.

This routine, which runs once per second, decrements the TimeToGo parameter which is displayed on the control panel whenever a cleaning cycle is being run.

## Exemplary Cleaning Cycle

The following is an example of a cleaning cycle using the preferred embodiment to clean a CSD with four syrup lines and one ice cream cone dispenser.

There are five main parts to a full cleaning cycle: (1) first rinse, (2) wash with detergent, (3) second rinse, (4) sanitize, and (5) final drain. An optional rinse cycle can be added before the final drain.

## First Rinse.

The object of the first rinse is to clear as much shake and cone mix from the machine as possible. To minimize the power line surge when the CSD is started, first the shake product pump is started, and one second later the cone product pump is started.

Water flow is started immediately. After a delay of one second, the water flow is tested for ten seconds to confirm that the water supply can deliver at least nine liters per minute. The test is set up by providing a step with a minimum water flow value, but a don't care (i.e., FFH) value for the specified maximum water flow.

As the water level in the mix tank rises, the water level will rise above the inlet for the syrup line pumps 80-88 and these lines will be filled with water.

For about a minute and a half, the cone and shake freezer barrels are filled with all draw valves shut. Since the system allows the syrup lines and draw valve actuators to be connected randomly to the CSD, the next step is to match syrup lines with actuators. To do this, each shake draw valve actuator is opened up, one at a time. First the pressure in the syrup line is allowed to stabilize for several seconds (with StepData.Assign = 0) and then the draw valve is kept open for another second or two with the StepData.Assign = 1), so that the ASSIGN routine will determine which syrup line pump is connected to each of the shake draw valve actuators. The assignment process is repeated for each shake draw valve. If there any serious leaks, or any clogged lines, no assignment can be made.

During most operations, the spinners in the shake draw valves are activated by setting StepData.K1 equal to 1.

Then the following process is repeated four times: all the draw valves are closed for several seconds to build pressure in the freezers; then each valve is opened for 12 seconds in turn with StepData.Test = 1 so that the integrity of the syrup lines is tested. Also, during the fourth repetition, the water valve is closed so that the mix tank will be drained. Then a drain operation is performed to prepare for the wash subcycle.

## - Drain Operations.

During this and every other drain operation, the follow sequence is used. First, all the draw valves are closed for a few seconds, with StepData.K1 = 0, to allow the spinner relays to unlatch. Then all draw valves are opened with the spinners off (StepData.K1 = 0) to allow the shake freezer to drain without back pressure from the spinners. Because there may still be a large amount of water in the freezers, and there is now no back pressure at the draw valves from the spinners, the draw valves are periodically closed to allow the drain pump 104 to catch up and to avoid overflowing the drain pan 100. As the water level in the tank drops, the water level will drop below the inlet to the syrup line pumps 80-88, and the syrup lines will be cleared with air.

## Wash Subcycle.

The wash sub-cycle starts with a half minute mix tank fill, followed by two "fill and flush" cycles, a "fill and soak" cycle, followed by two more "fill and flush" cycles, and a final "fill and soak" cycle. Like the first rinse, each flush starts by blasting a different draw valve, but then the remaining three draw valves are opened simultaneously.

The soak periods last for one minute each and allow the cleaning solution to penetrate, under pressure (i.e., with the draw valves closed), those areas inside the freezer where it does not normally go when the pumps and spinners are moving.

After a one second delay from the start of the wash cycle, the water inlet flow is tested again for several seconds to make sure that an adequate supply is being provided.

Throughout the wash cycle, StepData.DetPmp equals 1, and detergent is metered into the mix tank in proportion to the flow of water coming into the tank. During the first half minute, StepData.Alt is set equal to 1 so that detergent is added to the mix tank water at about twice the normal rate to compensate for the dilution caused by the residual water in the freezer barrels. This will result in a higher conductivity reading in the mix tank than just mixing the prescribed volumes of detergent and water, but this effect is accounted for by increasing the upper conductivity limit, StepData.Beta-H during this precharge time. Conductivity is checked during most of the cleaning cycle to confirm that the detergent is at an acceptable concentration. Note that conductivity is not used, in the preferred embodiment, to control the amount of detergent added, so that it can be used as a truly independent cross check of the detergent feeding system.

In the middle of the wash cycle, after water flow through the system has stabilized, the cone and shake mix pumps are tested (by setting both StepData.Flow-L and StepData.Flow-H) to make sure that a reasonable flow rate (e.g., between four and 7.5 liters per minute) is being drawn by these pumps.

The last part of the wash cycle is a drain sequence, with the water valve turned off sufficiently early that the mix tank and freezers should be cleared of detergent solution by the end of the wash cycle.

## Second Rinse.

The second rinse consists of the steps of filling the freezer barrels with water, one round of draw valve actuation, and a drain.

## Sanitize Subcycle.

The sanitize cycle is basically the same as the wash cycle except that sanitizer is metered into the mix tank instead of detergent. Note that the conductivity level of sanitizer is typically about one fourth the conductivity of detergent, and thus the sanitizer conductivity test levels will be approximately 25 to 30 Beta units lower than the detergent conductivity test levels.

## Optional Rinse.

In some applications and in accordance with health regulations of some countries, it is necessary to rinse the cleaned system after the sanitation cycle. This may be accomplished in the same manner as the rinse cycle after the detergent cycle.

## Final Drain.

The final drain is similar to the earlier drain operations at the end of the rinse and wash cycles. This time, however, additional time is allowed for the drain pump to clear the drain pan. When the last step of the cleaning cycle is performed, a log of the cycle is stored in the Status Report Log, as shown in Figure 12.

## Alternate Embodiments

While the present invention has been described with reference to a few specific embodiments, the description is illustrative of the invention and is not to be construed as limiting the invention. Various modifications may occur to those skilled in the art without departing from the true spirit and scope of the invention as defined by the appended claims.

For instance, it would be a simple matter to expand the number of pumps and actuators in the preferred embodiment so that the clean in place system could handle even bigger cone/shake dispensers - such as a machine with up to four cone freezers (for different flavored cones) and up to six milk shake flavors.

An even more important alternate embodiment, mentioned briefly above, is that all or a portion of the clean in place system could be incorporated in the same housing as the cone/shake maker. The advantage of a totally integrated embodiment is clear - it saves space and would reduce the cost of a clean in place

0 287 194

system by eliminating the moveable cart, reducing the amount of memory needed by eliminating the need for cleaning step programs for several models, reducing the number of pumps and actuators used with small cone·shake makers, and possibly by allowing the use of a single controller for both normal operation and for cleaning tasks.

TABLE 3


DISPLAY MESSAGE TABLE


Top Line                              Blank Line
    MODEL NUMBER


Status Line                           Clock Mode: Time and Date
    CYCLE   STOPPED                        TIME      HH:MM:SS
    RINSE                                  DATE      MM:DD:YY
    WASH
    SANITIZE
    DRAIN


Time To Go Line
    TIME TO GO


Problem Reports                       No Error Reports
    MIX PUMP PROBLEM                       MIX PUMPS ------ OK
    WATER SUPPLY PROBLEM                   WATER SUPPLY --- OK
    LOW WATER TEMPERATURE                  WATER TEMP ----- OK
    SANITIZER PROBLEM                      SANITIZER SUPPLY OK
    DETERGENT PROBLEM                      DETERGENT SUPPLY OK
    LEAKING SYRUP LINE                     SYRUP LINES ---- OK
    CLOGGED SYRUP LINE                     DRAIN LINE ------ OK
    CLOGGED DRAIN LINE

23

## TABLE 4

### LOGARITHMIC BETA LOOKUP TABLE

| BETA VALUE | PROBE MEASUREMENT |
|:---:|:---:|
| -1 | 34 |
| 0 | 36 |
| 1 | 38 |
| 2 | 40 |
| 3 | 42 |
| 4 | 44 |
| 5 | 46 |
| 6 | 49 |
| 7 | 51 |
| 8 | 54 |
| 9 | 56 |
| 10 | 59 |
| 11 | 62 |
| 12 | 65 |
| 13 | 68 |
| 14 | 72 |
| 15 | 75 |
| 16 | 79 |
| 17 | 83 |
| 18 | 87 |
| 19 | 92 |
| 20 | 96 |
| 21 | 101 |
| 22 | 106 |
| 23 | 111 |
| 24 | 117 |
| 25 | 123 |
| 26 | 129 |
| 27 | 135 |
| 28 | 142 |
| 29 | 149 |
| 30 | 157 |
| 31 | 164 |
| 32 | 173 |
| 33 | 181 |
| 34 | 190 |
| 35 | 200 |
| 36 | 210 |
| 37 | 220 |
| 38 | 231 |
| 39 | 243 |
| 40 | 255 |

## 0 287 194

## Claims

1. A cleaning system for a fluid product dispenser (18), said dispenser having means (28) for supplying fluid product to a dispensing valve (22), said cleaning system is characterized in:

   i) a mixing tank (40) for containing rinse/treatment solutions;

   ii) means (70) for delivering rinse/treatment solutions from said mixing tank to the fluid product supply means (28);

   iii) means (122) for actuating the dispensing valve (22) to open and close the dispensing valve (22) where said actuating means (122) is responsive to valve open/close signals;

   iv) means (50) for controlling said cleaning system, said control means generating said valve open/close signals to open and close the dispensing valve (22) a multiplicity of times in accordance with a predefined sequence to release intermittently the rinse/treatment solutions from the fluid product supply means through the dispensing valve (22).

2. A cleaning system as set forth in Claim 1, wherein the dispenser (18) includes a dispensing draw valve (24) which is coupled to a flavor supply line (90) and the fluid product supply means (28) to supply a correspondingly flavored fluid product, said cleaning system includes status means (112) for communicating information to the user of said cleaning system, means (82) for pumping rinse/treatment solutions from said mixing tank (40) into the flavor supply line (90), said pump means (82) including a pressure switch generating a pressure signal indicating whether the solution pressure in the flavor supply line (90) exceeds a predefined pressure limit, said control means (50) includes means for generating an error message on said status means (112) if (a) said pressure signal indicates that the corresponding flavor line (90) pressure is below said limit for at least a threshold period of time while the corresponding draw valve (22) is closed, or (b) said pressure signal indicates that the corresponding line pressure is above said limit for at least a threshold period of time while the corresponding draw valve (22) is open, whereby said cleaning system can warn the user of said cleaning system that a flavor line (90) requires repair.

3. A cleaning system of claim 1 wherein said cleaning system includes means for mixing treatment solutions in said mixing tank (40), said mixing means including a water inlet (42) for supplying water to said mixing tank (40) as solution is delivered by said delivering means from the mixing tank (40) to said dispenser, means (44) for measuring the rate of water flow through said water inlet (42) into said mixing tank (40) and means for supplying treatment chemicals (50, 52, 54) to said mixing tank (40) at a rate corresponding to the rate of water flow into said mixing tank (40).

4. A cleaning system of claim 3 further including a conductivity probe (64) in said mixing tank (40) for generating a conductivity signal corresponding to the conductivity of the fluid in said mixing tank (40), and status means (112) for communicating status information to the user of said cleaning system, wherein said control means (50) includes means for comparing said conductivity signal with a predefined allowed conductivity range, and means for generating an error message on said status means (112) if said conductivity signal is outside said predefined allow range for at least a threshold period of time.

5. A cleaning system of claim 1 for cleaning a cone/shake dispenser (18) wherein the dispenser (18) has at least one freezer (28), each freezer having a product inlet, a product pump for pumping product from the product inlet into the freezer (28), the dispensing valve (22) being a draw valve which when opened dispenses product from the freezer (28), said delivery means delivering the rinse/treatment solutions to the product pump, said control means (50) generating product pump on/off signals to which the product pump is responsive, said control means (50) supplying pressurized rinse/treatment solutions in said at least one freezer (28) by generating said product pump on signal.

6. A cleaning system of claim 5, wherein the cone/shake dispenser includes a plurality of shake dispensing draw valves (24), each coupled to a separate syrup supply line (90) and a common shake freezer (28), said cleaning system includes separate draw valve actuating means (122) for opening and closing each of said shake dispensing draw valves (24), each responsive to separate valve open/close signals, said control means (50) including means for generating said separate valve open/close signals for opening and closing each said shake dispensing draw valve (24) in accordance with a specified schedule, whereby each draw valve (24) can be opened separately so that the full pressure developed by the shake freezer's product pump is separately applied to each draw valve (24).

7. A cleaning system of claim 5, wherein said system included model identifying means for identifying the configuration of a cone/shake dispenser, including the number of freezers (28) and the number of shake dispensing draw valves (24) coupled to a shake freezer, if any, in said cone/shake dispenser (18); wherein each shake dispensing draw valve (24) is coupled to a separate syrup supply line (90) and a common shake freezer (28); the number of said draw valve actuating means (122) exceeds the number of draw valves (24) on at least one cone/shake dispenser configuration that can be cleaned by said system; and a plurality of pumps (82, 84, 86, 88) for pumping fluid from said mixing tank (40) into syrup supply lines (90); each said pump (82, 84, 86, 88) including a pressure switch (92) for generating a pressure signal indicating whether the pressure on the corresponding syrup line (90) exceeds a predefined pressure limit; said control means (50) including assigning means for separately activating each said draw valve actuating means (122) and then monitoring said pressure signals to determine if said draw valve actuating means (122) is coupled to one of said draw valves (24), and to determine the corresponding syrup line pump (82, 84, 86, 88); said control program thereby assigning one draw valve actuating means (122) and one pump (82, 84, 86, 88) to each shake dispensing draw valve (24) associated with said identified configuration of said cone/shake dispenser (18); means for generating, while cleaning said cone/shake dispenser, separate valve open/close signals for each assigned draw valve actuating means (122), for opening and closing each said shake dispensing draw valve (24), in accordance with a specified schedule; whereby said cleaning system can clean cone/shake dispensers having a plurality of different configurations.

8. A method of cleaning a fluid product dispenser (18), said dispenser (18) having means (28) for supplying fluid product to a dispensing valve (24), said method comprises:

    i) removing fluid product from said dispenser's fluid product supply means;

    ii) providing in a tank required rinse/treatment solutions;

    iii) delivering the rinse/treatment solutions from said tank to said fluid product supply means;

    iv) pressurizing said solutions in said fluid product supply means;

    v) opening and closing the dispensing valve (24) a multiplicity of times to pass said solutions through said fluid product supply means and said dispensing valve (24);

    the method being characterized in providing means (122) for actuating said dispensing valve (24) to open and close said valve (24), and providing a preprogrammed controller (50) with a program to generate signals for actuating said actuation means (122) to open and close the dispensing valve (24) in accordance with a schedule predetermined by said program.

9. A method of claim 8 wherein said treatment solutions include a detergent solution and a sanitizer solution, said preprogrammed controller (50) being provided with a program for generating signals to control the repetition of said steps ii through v so as to clean said dispenser (18) with said detergent solution, rinse said dispenser with water, and then clean said dispenser with said sanitizer solution.

10. A method of claim 8 wherein said dispenser includes a plurality of dispensing valves (24) coupled to said product supply means, said method being characterized in providing separate actuating means (122) for actuating each of said dispensing valves (24) to open and close each of said dispensing valves (24), each said actuating means (122) responsive to separate valve open/close signals, and providing said preprogrammed controller (50) with a program to generate said separate valve open/close signals for opening and closing each said shake dispensing draw valve (24) in accordance with a schedule predetermined by said program, and to separately pass pressurized solutions in said fluid product supply means to each dispensing valve (24).

FIG.1.

FIG.1A.

FIG.1B.

FIG.1C.

0 287 194

FIG.1D.

0 287 194

## FIG.2.

## FIG.3.

FIG.4.

DOWN UP

AIR COMP. 130

134

3 WAY VALVE

50 CONTROLLER

4 WAY VALVES

124

122

138

132

136

FIG.4A.

K2

130

130a

130b

132

138

124

130c

134

122

0 287 194

FIG.4B.

18

90

26

32

28

120

FIG.4C.

18

100

122,124

102    102a    42a

FIG.4D.

202

24d

A

24c

24a

24

A

200

246

124

0 287 194

FIG.4E.

124c

124e

124d

124f

124b

124

124a

0 287 194

FIG.4F.

24c
24d
24
24e
124
206
204 SYRUP LINE CONNECTION

FIG.4G.

0 287 194

FIG.4H.

FIG.41.

122a

122

FIG.4J.

22

22e

122

216

0 287 194

FIG.4K.

22

216

122

FIG.4L.

- 222
- 210
- 224
- 226a
- 216
- 226b
- 226
- 26

FIG.4M.

236

220   210

26

100

231

230   236

FIG.4N.

238

234

232

SANIT. MOTOR —— i7
i6
DET. MOTOR —— i5    Adr   AD2-Ø   EN
TEMP. PROBE —— i4
CONDUCTIVITY PROBE    ADC
64    SOC — ADCe.R/W
i3-0 DE — ADCe.R/W
D
EOC

156   A15·14   2to4 DECODER G — ACDe / RAMe / ROMe   2to4 DECODER G
AD·12
170

154

K2   AIR COMP.   130
LATCH LE → A7-Ø   ACTUATOR

152   ALA.   3X   K3-1 → CBS MACH.   116
164   LATCH OE.   shake 4-1 off   cone off   LEDS

FLOW METER
INT3   B4 → ALA
INT2   B5 → R/W
B2   B6 → EN
ENABLE ← B0   ENABLE —
160 — BUZZER ← B3   D7-0 → A15·8
162 — B1
WATCHDOG → RESET
114 — KEYPAD   C7-0
Start Sw.
Sanit. Sw.
Drain Sw.   A7-0
Stop Sw.   CPU   150
MACHINE ID JUMPER   SEL3-0

OE. LATCH   shake 4-1 on   cone on   water on → WATER Sw.
det. on ——→ DET. Mtr.
166   2X   sanit. on ——→ SANIT. Mtr.

PRESSURE SWITCHES
◁   OE   2X
168   154

112   AØ
mode
DISPLAY d
e

STATIC RAM + CLOCK   adr — A12-0
we
OE — R/W
CE — RAMe

PROG ROM   adr — A13-Ø
CE — ROMe
DE — EN
152

A10
OX

FIG.5.

0 287 194

FIG.6.

FIG.6A.

SIGNAL

GND

FROM PROBE DRIVE

PROBE 3

PROBE 2

PROBE 1

PROBE Ø

0 287 194

FIG.7.

SET WATCHDOG SIGNAL B-PART 2
WAIT FOR.125sec BOUNDARY
RESET WATCHDOG SIGNAL

CALL:MODE
DATA
DISPLAY
CONDUCTIVITY
INPUT
FLOW
SOAP
MACHINE
MACH TYPE
START CYCLE
ENABLE
WATER
LEVER
ALARM
DRAIN
ASSIGN
ERROR

— 170

NEW SECOND
?

N

Y

CALL: STEPIT
ERROR INT.
TIME TO GO

FIG.8.

| | | 8 | 6 | 6 | 2 | |

SEL3-0 = 0000

START ADDR.
STEP DATA

MAX TIME-ERROR Ø

MAX TIME-ERROR 7

NUM. SHAKE
VALVES                    191

184

| | | 8 | 6 | 6 | 4 | |

SEL3-0 = 001

186

188  START ADDR.

190  MAX TIME-ERROR Ø

SEL3-0 = 1111
182

SETUP DATA TABLE

STEP TABLE      181

180

192

193

OUTPUT MASK
  BØ  SHAKE 1 ON(DOWN)
  B1  SHAKE 2 ON
  B2  SHAKE 3 ON
  B3  SHAKE 4 ON
  B4  CONE    ON
  B5  WATER VALVE ON
  B6  DETERGENT PUMP ON
  B7  SANIT. PUMP ON

MISC. MASK
  BO  LAST STEP
  B1  SANIT   CYCLE STEP
  B2  TEST SYRUP LINES
  B3  ASSIGN SYRUP LINES
  B4  ALT. PRODUCT FEED RATE
  B5  RELAY K1 ON
  B6  RELAY K2 ON
  B7  RELAY K3 ON

CYCLE NAME   (ptr)
MIN CONDUCTIVITY (Betas)
MAX CONDUCTIVITY
MIN FLOWRATE (Pulses/.5S)
MAX FLOWRATE
STEP TIME (IN SEC.)

192

194

196
⇒

198

STEPDATA ·LEVER 1
         ·LEVER 2
         ·LEVER 3
         ·LEVER 4
         ·LEVER
              CONE
         ·WATER V
         ·DET. PMP.
         ·SANIT.
              PMP.

         ·LAST
         ·SANIT.
         ·TEST
         ·ASSIGN
         ·ALT.
         ·K1
         ·K2
         ·K3

         ·CYCLE
         ·BETA L
         ·BETA N
         ·FLOW-L
         ·FLOW-H
         ·TIME

FIG.9.

KEYPAD AND SEL
HARDWARE

RAWIN0    LASTA              VALIDIN0                    DATA CHANGE0

| b0-b3: SEL0-3:ID OF MACHINE TO BE CLEANED |
| b4: KEYPAD*1 ACTIVE: START CYCLE |
| b5: KEYPAD*2 ACTIVE: START SANIT CYCLE |
| b6: KEYPAD*3 ACTIVE: STOP CYCLE |
| b7: KEYPAD*4 ACTIVE: DRAIN ONLY |

PRESSURE SWITCH
HARDWARE

RAWIN1    INTEGRATORS              VALIDIN1                DATACHANGE 1

.0
.1
.1
.3
.4
.5

| b0: SYRUP LINE 1 PUMP ON |
| b1: SYRUP LINE 2 PUMP ON |
| b2: SYRUP LINE 3 PUMP ON |
| b3: SYRUP LINE 4 PUMP ON |
| b4: DRAIN LINE PUMP ON · NOT CLOGGED |
| b5: CONE PRESSURE LINE PUMP ON |
| b6-b7: NOT USED |

IF INTEGRATOR.I = 0
  SET VALIDIN1.bI = 0

IF INTEGRATOR.I = 24
  SET VALIDIN1.bI = 1

## FIG.10.

FLAG REG

| | |
|---|---|
| CYCLEON: | CYCLE IN PROGRESS |
| ASSIGNED: | LEVERS ASSIGNED |
| DRAIN: | DRAIN ONLY CYCLE RUNNING |
| SANIT: | SANIT. ONLY CYCLE RUNNING |
| BEEP: | SINGLE 1 SEC. BEEP |
| INTRG.1: | INTEROGATE MODES: CYCLE LOG |
| INTRG.2: | INTEROGATE MODES: LOGGED ERRORS |
| PROG.: | PROG. MODE: SET CLOCK |

## FIG.13.

| |
|---|
| LEVER REG.1 |
| LEVER REG.2 |
| LEVER REG.3 |
| LEVER REG.4 |

DATA OUT 0

| |
|---|
| b0: SHAKE LEVER 1 ON (DOWN) |
| b1: SHAKE LEVER 2 ON (DOWN) |
| b2: SHAKE LEVER 3 ON (DOWN) |
| b3: SHAKE LEVER 4 ON (DOWN) |
| b4: CONE LEVER ON (DOWN) |
| b5: WATER VALVE ON |
| b6: DET. PUMP ON |
| b7: SANIT. PUMP ON |

DATA OUT 1

| |
|---|
| b0 SHAKE LEVER 1 OFF (UP) |
| b1 SHAKE LEVER 2 OFF (UP) |
| b2 SHAKE LEVER 3 OFF (UP) |
| b3 SHAKE LEVER 4 OFF (UP) |
| b4 CONE LEVER OFF (UP) |
| b5 RELAY K1 ON |
| b6 RELAY K2 ON |
| b7 RELAY K3 ON |

## FIG.11.

## FIG.12.

STATUS REPORT LOG

REPORT FORMAT

7 , 6 , 5 , 4 , 3 , 2 , 1 , 0

| YEAR | MONTH |
|---|---|
| DAY | HOUR |
| HOUR | MIN. |
| CYCLE RUN | N/A | MACHINE MODEL |
| ERROR FLAGS LOGGED | |

←VIEWRECORD

←NEXTRECORD

ERROR FLAG

| .b0 |
| .b1 |
| .b2 |
| .b3 |
| .b4 |
| .b5 |
| .b6 |
| .b7 |

ERRORLOG

AT END OF CYCLE

| ERRORLOG.b0: MIX PUMP FLOW PROBLEM |
| ERRORLOG.b1: LOW WATER FLOW |
| ERRORLOG.b2: LOW WATER TEMP. |
| ERRORLOG.b3: SANIT. PROBLEM |
| ERRORLOG.b4: DET. PROBLEM |
| ERRORLOG.b5: LEAKING SYRUP LINE |
| ERRORLOG.b6: CLOGGED SYRUP LINE |
| ERRORLOG.b7: CLOGGED DRAIN LINE |

ERORLOG DATA STRUCTURE

FOR

INTEGRATED ERROR FLAGS

ERROR INT

IF ERROR INT.n=0 SET ERRORLOG .bn=1

| ERROR,INT.0: MIX PUMP FLOW PROBLEM |
| ERROR,INT.1: LOW WATER FLOW |
| ERROR,INT.2: LOW WATER TEMP. |
| ERROR,INT.3: SANIT. PROB. |
| ERROR,INT.4: DET. PROB. |
| ERROR,INT.5: LEAKING SYRUP LINE |
| ERROR,INT.6: CLOGGED SYRUP LINE |
| ERROR,INT.7: CLOGGED DRAIN LINE |

ERROR INTEGRATORS

SETUP DATA→ AT CYCLE START